# EUROPEAN PATENT SPECIFICATION

(11) **EP 0 920 231 B1**
(45) Date of publication and mention of the grant of the patent: **26.05.2004**
(21) Application number: 98115191.3
(22) Date of filing: 12.08.1998
(51) Int. Cl.: H04Q 11/00

(54) **System and method for address resolution**
System und Verfahren zur Adressenauflösung
Sytème et méthode de résolution d'adresses

(30) Priority: 26.11.1997 JP 32476797
(43) Date of publication of application: 02.06.1999
(73) Proprietor: Asano, Shoichiro, Tokyo, 156-0054 (JP); Matsukata, Jun, Kawasaki-shi, Kanagawa 211-0954 (JP); MITSUBISHI DENKI KABUSHIKI KAISHA, Tokyo 100-8310 (JP)
(72) Inventor: Asano, Shoichiro, Setagaya-ku, Tokyo 156-0054 (JP); Matsukata, Jun, Kawasaki-shi, Kanagawa 211-0954 (JP); Numakura, Ayumu, Mitsubishi Denki Kabushiki Kaisha, Chiyoda-ku, Tokyo 100-8310 (JP)
(74) Representative: Pfenning, Meinig & Partner

(56) References cited:
- US-A- 5 412 655
- US-A- 5 541 918
- US-A- 5 553 057

## Description

### Background of the Invention

### Field of the Invention

This invention relates to an address resolution method using NHRP (Next Hop Resolution Protocol) in an ATM (Asynchronous Transfer Mode) network to which a plurality of ATM switches and ATM terminals is connected. Particularly, this invention relates to an address resolution method for optimizing a transmission connection condition even if a VC (Virtual Connection) resource at a destination ATM terminal is insufficient. This invention also relates to an address resolution method using ATMARP (Asynchronous Transfer Mode Address Resolution Protocol) for realizing a possible transmission connection condition even if a VC resource at a destination ATM terminal is insufficient.

### Description of the Related Art

NHRP is used in some of the address resolution methods in an ATM network according to the related art. The NHRP is discussed in IETF (Internet Engineering Task Force), and the specifications are described in a document "draft-ietf-ion-nhrp-11.txt", etc. A method for obtaining an ATM address of a receiver based on an IP address of the receiver is necessary for performing an IP (Internet Protocol) transmission in the ATM network. Therefore, according to the NHRP, sets of IP addresses and ATM addresses of ATM terminals connected to an ATM network are controlled distributedly by a NHRP server, i.e., NHS (Next Hop Server), which is provided in each area, e.g., logical subnet (LIS: Logical IP Subnet).

When an ATM terminal needs to resolve an ATM address of a receiver corresponding to an IP address of the receiver, the ATM terminal sends a NHRP request packet to a predetermined NHS. When the NHS receives the NHRP request packet, if the NHS can resolve the ATM address, the NHS sends a NHRP reply packet to the ATM terminal. If the NHS cannot resolve the ATM address, the NHS transfers the NHRP request packet to another NHS. The NHRP request packet is transferred to other NHS's subsequently until the ATM address can be resolved by a NHS.

Then, when a NHRP reply packet is outputted from the NHS which can resolve the address, the NHRP reply packet is transferred to the NHS's in a reverse way and sent to the origin ATM terminal.

Besides the NHRP, the ATMARP is also used in the address resolution method in the ATM network according to the related art. The ATMARP is also discussed in IETF, and the specifications are written in RFC1577, etc.

A method for obtaining an ATM address of a receiver based on an IP address of the receiver is necessary for performing an IP transmission in an ATM network. According to the ATMARP, sets of IP addresses and ATM addresses of ATM terminals connected to the ATM network are controlled by an ATMARP server which is provided in each logical subnet (LIS).

When an ATM terminal needs to resolve an ATM address of a receiver corresponding to an IP address of a receiver, if the receiver is in the same subnet with the ATM terminal, an ATMARP request packet is transmitted from the ATM terminal to a predetermined ATMARP server. When the ATMARP server receives the ATMARP request packet, if the ATMARP server can resolve an ATM address, the ATMARP server sends an ATMARP reply packet to the above-stated ATM terminal. If the ATMARP server cannot resolve the ATM address, the ATMARP server sends an error reply to the ATM terminal. If the receiver is a terminal in another subnet, a data is transmitted to a router.

In the following, an operation of the address resolution method using the NHRP according to the related art is stated with reference to drawings.

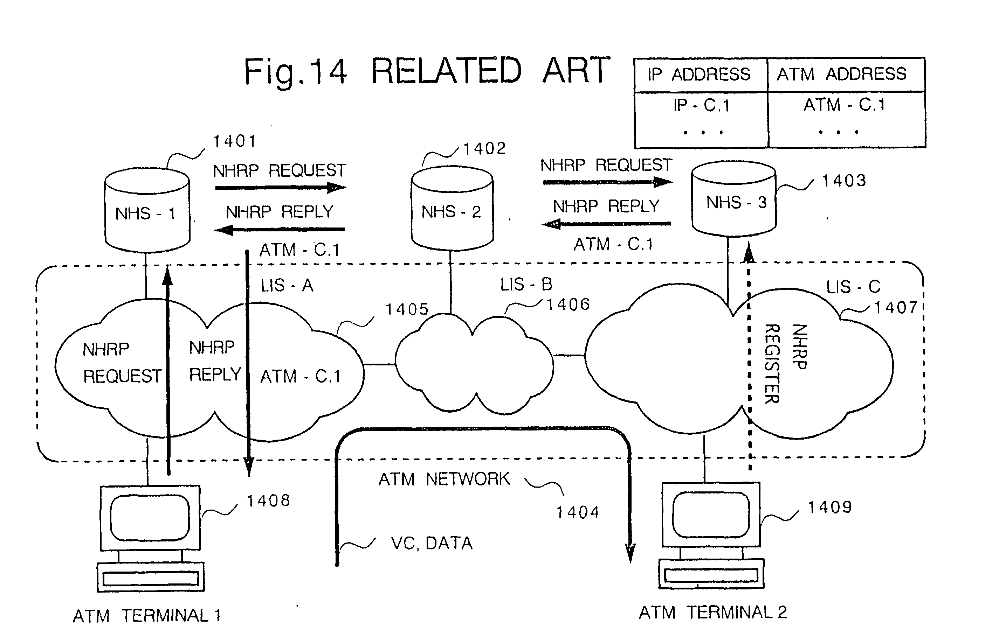

An explanatory chart of an address resolution method using the NHRP according to the related art is shown in Fig. 14. In Fig. 14, servers, i.e., NHS - 1 1401, NHS - 2 1402, and NHS - 3 1403, and ATM network 1404 are illustrated. A logical subnet LIS - A 1405, which the NHS - 1 1401 belongs to, a logical subnet LIS - B 1406, which the NHS - 2 1402 belongs to, and a logical subnet LIS - C 1407, which the NHS - 3 1403 belongs to are also illustrated. An ATM terminal 1 1408, origin terminal, is located in the LIS - A 1405, and an ATM terminal 2 1409, destination terminal, is located in the LIS - C 1407. In Fig. 14, ATM switches, connecting lines, etc. which constitute the ATM network are omitted.

An operation of the address resolution method is explained with reference to Fig. 14. It is assumed that three LIS's (LIS - A 1405, LIS - B 1406, LIS - C 1407) are defined in the ATM network 1404. A respective LIS number is allocated to each of the LIS's. For ATM terminals belonging to each of the LIS's, IP addresses including its LIS number are provided. Therefore, the NHS's can identify a LIS, to which an ATM terminal belongs to, by referring to a LIS number in an IP address of the ATM terminal.

In this ATM network, three NHS's (NHS - 1 1401, NHS - 2 1402, NHS - 3 1403) are provided. Each NHS is predetermined to control sets of IP addresses and ATM addresses of ATM terminals in a particular LIS. In Fig. 14, the NHS - 1 1401 controls the LIS - A 1405, NHS - 2 1402 controls the LIS - B 1406, and the NHS - 3 1403 controls the LIS - C 1407.

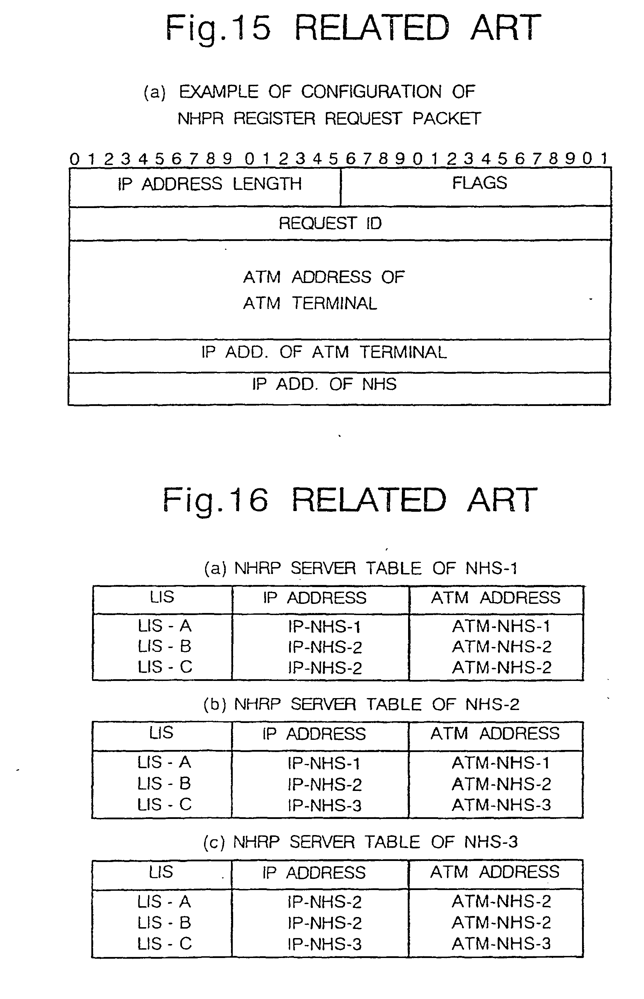

Each ATM terminal reports a set of its IP address and its ATM address to the NHS, which controls the ATM terminal, by transmitting a NHRP register request packet regularly or when an information on the set of the IP address and the ATM address is changed. When the NHS receives the NHRP register request packet, the NHS stores the NHRP register request packet. A format of the NHRP register request packet is shown in Fig. 15.

Each NHS maintains a NHRP server table including an information on NHS's, to which a NHRP request should be transferred, if the NHRP request to an ATM terminal in a LIS cannot be resolved. An example of the NHRP server table maintained by each of the NHS's is illustrated in Fig. 16.

In Fig. 14, when the ATM terminal 1 1408 needs to transmit an IP data gram to the ATM terminal 2 1409, the ATM terminal 1 1408 generates a NHRP request packet including an IP address of the ATM terminal 2 1409, and sends the NHRP request packet to the NHS - 1 1401.

When the NHS - 1 1401 receives the NHRP request packet, the NHS - 1 1401 checks the IP address included in the NHRP request packet and recognizes that the request is addressed to the ATM terminal 2 1409. Since the NHS - 1 1401 doesn't maintain an information on the ATM terminal 2 1409, the NHS - 1 1401 refers to its NHRP server table. The NHS - 1 1401 searches the NHRP server table for the LIS number included in the IP address of the ATM terminal 2 1409, and finds that the NHRP request packet should be transferred to the NHS - 2 1402 for resolving the ATM address of the ATM terminal 2 which belongs to the LIS - C 1407. Then, the NHS - 1 1401 transfers the NHRP request packet to the NHS - 2 1402.

Since the NHS - 2 1402 neither maintains the information on the ATM terminal 2 1409, when the NHS - 2 1402 receives the NHRP request packet from the NHS - 1 1401, the NHS - 2 1402 also searches its NHRP server table, and finds that the NHRP request packet should be transferred to the NHS - 3 1403 for resolving the ATM address of the ATM terminal 2 which belongs to the LIS - C 1407. Then, the NHS - 2 1402 transfers the NHRP request packet to the NHS - 3 1403.

Since the NHS - 3 1403 maintains the information on the ATM terminal 2 1409, when the NHS - 3 1403 receives the NHRP request packet from the NHS - 2 1402, the NHS - 3 1403 generates a NHRP reply packet including the ATM address of the ATM terminal 2 1409. Then, the NHS - 3 1403 transfers the NHRP reply packet to the ATM terminal 1 via the NHS - 2 1402 and NHS - 1 1401.

When the ATM terminal 1 1401 receives the NHRP reply packet from the NHS - 3 1403 via the NHS - 2 1402 and NHS - 1 1401, the ATM terminal 1 1401 can obtain the ATM address of the ATM terminal 2 1402. Accordingly, the ATM terminal 1 1401 can provide a VC to the ATM terminal 2 1402 based on the ATM address of the ATM terminal 2 1402, and the ATM terminal 1 1401 can send the IP data gram in this ATM connection.

In the following, an operation of the address resolution method using the ATMARP according to the related art is stated with reference to drawings.

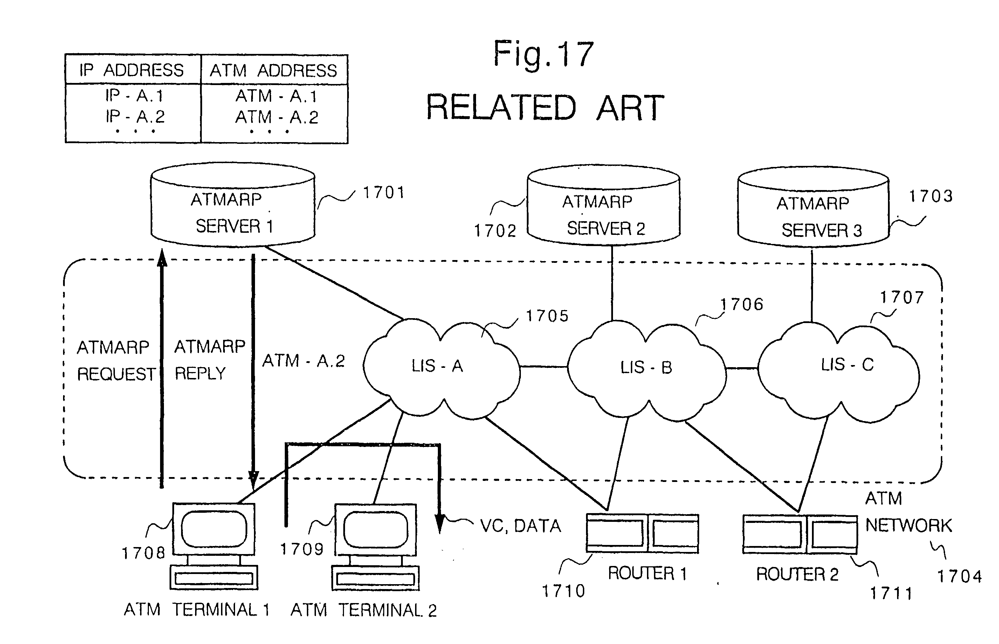

An explanatory chart of an address resolution method using the ATMARP according to the related art is shown in Fig. 17. In Fig. 17, an ATMARP server 1 1701, ATMARP server 2 1702, ATMARP server 3 1703, and ATM network 1704 are illustrated. A logical subnet LIS - A 1705, which the ATMARP server 1 1701 belongs to, a logical subnet LIS - B 1706, which the ATMARP server 2 1702 belongs to, and a logical subnet LIS - C 1707, which the ATMARP server 3 1703 belongs to are also illustrated. In Fig. 17, an ATM terminal 1 1708, origin terminal, and an ATM terminal 2 1709, destination terminal, are both located in the LIS - A 1705. A router 1 1710 is provided between the LIS - A 1705 and the LIS - B 1706, and a router 2 1711 is provided between the LIS - B 1706 and the LIS - C 1707. In Fig. 17, ATM switches, connecting lines, etc. , which constitute the ATM network are omitted.

An operation of the address resolution method is explained with reference to Fig. 17. It is assumed that three LIS's (LIS - A 1705, LIS - B 1706, LIS - C 1707) are defined in the ATM network. A respective LIS number is allocated to each of the LIS's. For ATM terminals belonging to each of the LIS's, IP addresses including its LIS number are provided. Therefore, the terminals or ATMARP servers can identify a LIS, to which an ATM terminal belongs to, by referring to a LIS number in an IP address of the ATM terminal.

In the ATM network 1704, three ATMARP servers (ATMARP server 1 1701, ATMARP server 2 1702, ATMARP server 3 1703) are provided. Each ATMARP server is predetermined to control sets of IP addresses and ATM addresses of ATM terminals in a particular LIS. In Fig. 17, the ATMARP server 1 1701 controls the LIS - A 1705, the ATMARP server 2 1702 controls the LIS - B 1706, and the ATMARP server 3 1706 controls the LIS - C 1707.

Each ATM terminal reports a set of its IP address and its ATM address to the ATMARP server, which controls the ATM terminal, by transmitting an ATMARP register request packet regularly or when an information on the set of the IP address and the ATM address is changed.

In Fig. 17, the ATM terminal 1708 needs to transmit an IP data gram to the ATM terminal 2 1709. The ATM terminal 1 1708 judges that the ATM terminal 2 1709 belongs to the same LIS with the ATM terminal 1 1708 by referring to the LIS number included in the IP address of the ATM terminal 2 1709. The ATM terminal 1 1708 generates an ATMARP request packet including the IP address of the ATM terminal 2 1709, and transmits the ATMARP request packet to the ATMARP server 1 1706 which controls the ATM terminal 1 1708.

When the ATMARP server 1 1701 receives the ATMARP request packet from the ATM terminal 1, the ATMARP server 1 1701 checks the IP address included in the ATMARP request packet, and recognizes that the ATMARP request packet is addressed to the ATM terminal 2 1709. Since the ATMARP server 1 1701 maintains the information on the ATM terminal 2 1709, the ATMARP server 1 1701 generates an ATMARP reply packet including the ATM address of the ATM terminal 2 1709, and sends the ATMARP reply packet back to the ATM terminal 1 1709.

When the ATM terminal 1 1708 receives the ATMARP reply packet, the ATM terminal 1 1708 can obtain the ATM address of the ATM terminal 2 1709. Accordingly, the ATM terminal 1 1708 can set a VC to the ATM terminal 2 1709 and transmit a necessary IP data gram in the ATM connection.

In the address resolution method using the NHRP and the ATMARP according to the related art, when a transmission is with many terminals or when a VC resource at a destination terminal is insufficient due to a memory amount, etc., it is impossible to set a VC even if an origin ATM terminal can resolve an address of the destination ATM terminal. In such case, even if there is another transmission route to the destination terminal, e.g., transmission from the ATM terminal 1 to the ATM terminal 2 via the NHS - 3, transmission to the destination terminal via the route is still impossible.

### Summary of the Invention

It is an object of this invention to solve the above-stated problems in the related art. This invention is intended to provide an address resolution method convertible with the methods using the NHRP and the ATMARP according to the related art. This invention aims at optimizing a transmission connection by using ATM terminals in the address resolution operation, even if a VC resource at a receiving ATM terminal is insufficient.

According to one aspect of this invention, an address resolution method, wherein ATM (Asynchronous Transfer Mode) addresses of ATM terminals connected to an ATM network are obtained from IP addresses of the ATM terminals comprises the steps of:
receiving a destination ATM address request for requesting an ATM address of a destination ATM terminal from an origin ATM terminal;
judging if a resource condition at the destination ATM terminal is sufficient for connecting to the origin ATM terminal; and
if the resource condition at the destination ATM terminal is sufficient, transmitting the ATM address of the destination ATM terminal to the origin ATM terminal.

According to another aspect of this invention, the address resolution method, wherein a plurality of ATM switches, NHRP (Next Hop Address Resolution Protocol) servers and ATM terminals are arbitrarily connected to the ATM network, comprises the steps of:
when one of the NHRP servers receives a NHRP request packet from an origin ATM terminal, if the NHRP server controls a destination ATM terminal at an ATM address included in the NHRP request packet, transferring the NHRP request packet directly to the destination ATM terminal, and if the NHRP server doesn't control the destination ATM terminal, transferring the NHRP request packet to the destination ATM terminal via at least one of the plurality of NHRP servers;
when the destination ATM terminal receives the NHRP request packet, checking its own VC (Virtual Connection) resource condition, and if the destination ATM terminal judges that its VC resource condition is sufficient for connecting, transmitting a NHRP reply packet including its own ATM address, and if the destination ATM terminal judges that its VC resource condition is insufficient for connecting, transmitting a NHRP reply packet indicating a rejection response; and
when the NHRP server receives the NHRP reply packet from the destination ATM terminal, if the NHRP server controls the origin ATM terminal, transferring the NHRP reply packet directly to the origin ATM terminal, and if the NHRP server doesn't control the origin ATM terminal, transferring the NHRP reply packet to the origin ATM terminal via at least one of the plurality of NHRP servers.

According to another aspect of this invention, the address resolution method, wherein a plurality of ATM switches, NHRP servers and ATM terminals are arbitrarily connected to the ATN network, comprises the steps of:
always monitoring and maintaining VC resource conditions of controlling ATM terminals by the NHRP servers; and
when one of the NHRP servers receives a NHRP request packet, judging a VC resource condition at a destination terminal, and if the NHRP server judges that the VC resource condition is insufficient for connecting, transmitting a NHRP reply packet indicating a rejection response, and if the NHRP server judges that the VC resource condition is sufficient for connecting, transmitting a normal NHRP reply packet.

According to another aspect of this invention, the address resolution method, wherein a plurality of ATM switches, NHRP servers and ATM terminals are arbitrarily connected to the ATM network, comprises the steps of:
always monitoring VC resource conditions of the ATM terminals by the ATM terminals;
if one of the ATM terminals judges that its VC resource conditions is insufficient for connecting, transmitting a NHRP register request packet indicating an unconnectable condition to one of the NHRP servers which controls the ATM terminal, and when the ATM terminal judges that its VC resource condition has become sufficient for connecting, transmitting a normal NHRP register request packet to the NHRP server which controls the ATM terminal; and
when the NHRP server receives a NHRP request packet from an origin ATM terminal, judging a VC resource condition at a destination ATM terminal, and if the NHRP server judges that the VC resource condition is insufficient, transmitting a NHRP reply packet indicating a rejection response, and if the NHRP server judges that the VC resource condition is sufficient, transmitting a normal NHRP reply packet.

According to another aspect of this invention, the address resolution method, wherein a plurality of ATM switches, NHRP servers and ATM terminals are connected to the ATM network, comprises the steps of:
always monitoring VC resource conditions of the ATM terminals by the ATM terminals; and
if one of the ATM terminals judges that the resource condition is insufficient for connecting, transmitting a NHRP purge request packet, and when the ATM terminal judges that the VC resource condition has become sufficient for connecting, transmitting a NHRP register request packet.

According to another aspect of this invention, the address resolution method, wherein a plurality of ATM switches, ATMARP (ATM Address Resolution Protocol) servers and ATM terminals are arbitrarily connected to the ATM network, comprises the steps of:
when one of the ATMARP servers receives an ATMARP request packet, transferring the ATMARP request packet to a destination ATM terminal at an ATM address included in the ATMARP request packet; and
when the destination ATM terminal receives the ATMARP request packet, judging its own VC resource condition, and if the destination ATM terminal judges that its VC resource condition is sufficient for connecting, transmitting an ATMARP reply packet including its own ATM address, and if the destination ATM terminal judges that its VC resource condition is insufficient for connecting, transmitting an ATMARP reply packet indicating a rejection response.

According to another aspect of this invention, the address resolution method, wherein a plurality of ATM switches, ATMARP servers and ATM terminals are arbitrarily connected to the ATM network, comprises the steps of:
always monitoring and maintaining VC resource conditions of controlling ATM terminals by the ATMARP servers; and
when one of the ATMARP servers receives an ATMARP request packet from an origin ATM terminal, judging a VC resource condition at a destination ATM terminal, and if the ATMARP server judges that the VC resource condition is insufficient for connecting, transmitting an ATMARP reply packet indicating a rejection response, and if the ATMARP server judges that the VC resource condition is sufficient for connecting, transmitting a normal ATMARP reply packet.

According to another aspect of this invention, the address resolution method, wherein a plurality of ATM switches, ATMARP servers and ATM terminals are arbitrarily connected to the ATM network, comprises the steps of:
always monitoring VC resource conditions of the ATM terminals by the ATM terminals;
if one of the ATM terminals judges that its VC resource condition is insufficient for connecting, transmitting an ATMARP request packet indicating an unconnectable condition, and when the ATM terminal judges that the VC resource condition has become sufficient for connecting, transmitting a normal ATMARP request packet; and
when one of the ATMARP servers receives the ATMARP request packet from an origin ATM terminal, judging a VC resource condition at a destination ATM terminal, and if the ATMARP server judges that the VC resource condition is insufficient for connecting, transmitting an ATMARP reply packet indicating a rejection response, and if the ATMARP server judges that the VC resource condition is sufficient for connecting, transmitting a normal ATMARP reply packet.

According to another aspect of this invention, an address resolution system, wherein ATM addresses of ATM terminals connected to an ATM network are obtained from IP addresses of the ATM terminals, comprises a server for receiving a destination ATM address request for requesting an ATM address of a destination ATM terminal from an origin ATM terminal, judging if a resource condition at the destination ATM terminal is sufficient for connecting to the origin ATM terminal, and if the resource condition at the destination ATM terminal is sufficient, transmitting the ATM address of the destination ATM terminal to the origin ATM terminal.

Further features and applications of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

Other objects features, and advantages of the invention will be apparent from the following description when taken in conjunction with the accompany drawings.

### Brief Description of the Drawings

Fig. 1 shows an explanatory chart of an embodiment of an address resolution method according to this invention;
Fig. 2 shows an explanatory chart of another embodiment of an address resolution method according to this invention;
Fig. 3 shows an explanatory chart of another embodiment of an address resolution method according to this invention;
Fig. 4 shows an explanatory chart of another embodiment of an address resolution method according to this invention;
Fig. 5 shows an explanatory chart of another embodiment of an address resolution method according to this invention;
Fig. 6 shows an explanatory chart of another embodiment of an address resolution method according to this invention;
Fig. 7 shows an explanatory chart of another embodiment of an address resolution method according to this invention;
Fig. 8 shows an explanatory chart of another embodiment of an address resolution method according to this invention;
Fig. 9 shows an explanatory chart of another embodiment of an address resolution method according to this invention;
Fig. 10 shows an explanatory chart of another embodiment of an address resolution method according to this invention;
Fig. 11 shows an explanatory chart of another embodiment of an address resolution method according to this invention;
Fig. 12 shows an explanatory chart of another embodiment of an address resolution method according to this invention;
Fig. 13 shows an explanatory chart of another embodiment of an address resolution method according to this invention;
Fig. 14 shows an explanatory chart of an address resolution method using NHRP according to the related art;
Fig. 15 illustrates an example of a format of a NHRP register request packet;
Fig. 16 illustrates an example of NHRP server tables of NHS's; and
Fig. 17 illustrates an address resolution method of the ATMARP method according to the related art.

### Detailed Description of the Preferred Embodiments

### Embodiment 1.

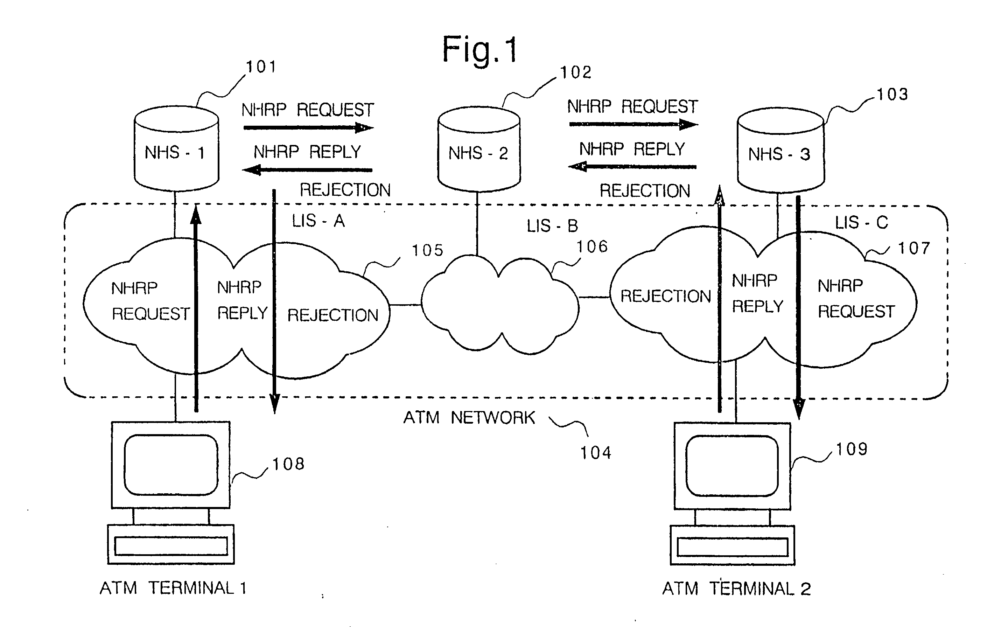

An explanatory chart of an address resolution method as an embodiment of this invention is shown in Fig. 1. In Fig. 1, a NHS - 1 101, NHS - 2 102, NHS - 3 103, and ATM network 104 are illustrated. A logical subnet LIS - A 105, which the NHS - 1 101 belongs to, a logical subnet LIS - B 106, which the NHS - 2 102 belongs to, and a logical subnet LIS - C 107, which the NHS - 3 103 belongs to are also illustrated. An ATM terminal 1 108, origin terminal, is located in the LIS - A 105, and an ATM terminal 2 109, destination terminal, is located in the LIS - C 107.

An operation of the address resolution method is explained with reference to Fig. 1.

In Fig. 1, when the ATM terminal 1 108 needs to transmit an IP data gram to the ATM terminal 2 109, the ATM terminal 1 108 sends a NHRP request packet including an IP address of the ATM terminal 2 109 to the NHS - 3 103 via the NHS - 1 101 and NHS - 2 102 as in the related art. When the NHS - 3 103 receives the NHRP request packet, the NHS - 3 103 checks the IP address included in the NHRP request packet and recognizes that the request is addressed to the ATM terminal 2 109.

Since the NHS - 3 103 maintains an address information of the ATM terminal 2 109 and a VC with the ATM terminal 2 109, the NHS - 3 103 transfers the NHRP request packet to the ATM terminal 2 109.

When the ATM terminal 2 109 receives the NHRP request packet, the ATM terminal 2 109 checks its own VC resource condition. If the ATM terminal 2 109 judges that the VC resource condition is sufficient for setting an ATM connection, the ATM terminal 2 109 generates a NHRP reply packet including its own ATM address, and transfers the NHRP reply packet to the ATM terminal 1 108 via the NHS - 3 103, NHS - 2 102 and NHS - 1 101. On the Contrary, if the ATM terminal 2 109 judges that the resource condition is insufficient for setting an ATM connection, the ATM terminal 2 109 generates a NHRP reply packet indicating a rejection response, and transfers the NHRP reply packet to the ATM terminal 1 108 via the NHS - 3 103, NHS - 2 102 and NHS - 1 101. After the NHRP reply packet is transferred to the ATM terminal 1 108, the NHRP reply packet is processed as in the related art.

As stated above, since the resource condition of the destination ATM terminal is sent back during the address resolution operation according to this embodiment, the origin ATM terminal can judge if an ATM connection with the destination ATM terminal can be set even before actually setting a VC.

### Embodiment 2.

In embodiment 1, when the destination terminal sends a rejection response to the NHRP request packet, the NHS cannot transfer the IP data gram. However, in embodiment 2, even if the destination terminal sends the rejection response, the IP data gram can be transferred.

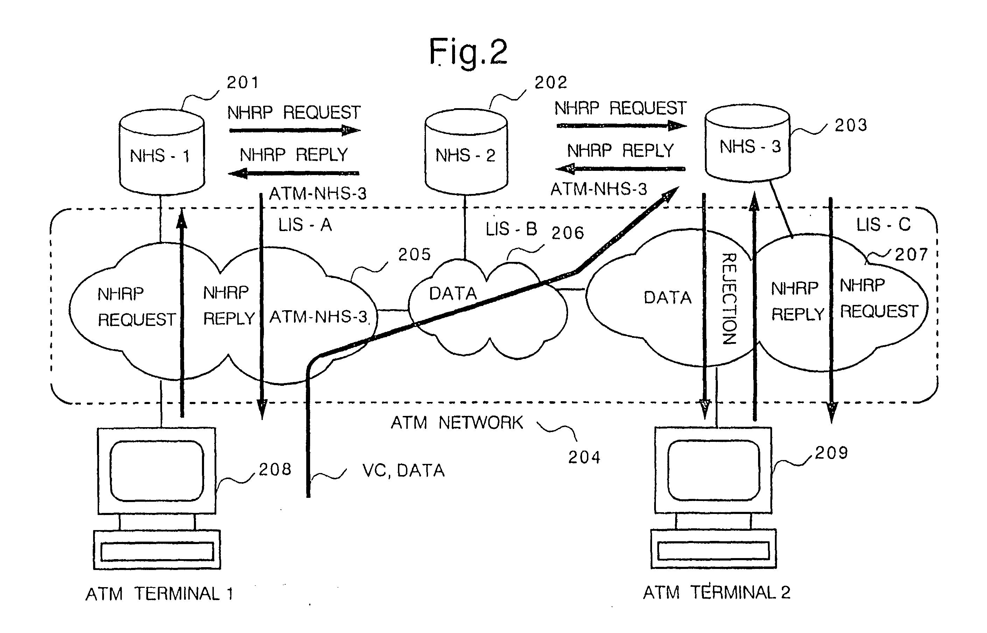

An explanatory chart of an address resolution method as another embodiment of this invention is shown in Fig. 2. In Fig. 2, a NHS - 1 201, NHS - 2 202, NHS - 3 203, and ATM network 204 are illustrated. A logical subnet LIS - A 205, which the NHS - 1 201 belongs to, a logical subnet LIS - B 206, which the NHS - 2 202 belongs to, and a logical subnet LIS - C 207, which the MHS - 3 203 belongs to, are also illustrated. An ATM terminal 1 208, origin terminal, is located in the LIS - A 205, and an ATM terminal 2 209, destination terminal, is located in the LIS - C 207.

An operation of the address resolution method is explained with reference to Fig. 2.

In Fig. 2, when the ATM terminal 1 208 needs to transmit an IP data gram to the ATM terminal 2 209, the ATM terminal 1 208 sends a NHRP request packet including an IP address of the ATM terminal 2 209 to the ATM terminal 2 209 as in embodiment 1.

When the ATM terminal 2 209 receives the NHRP request packet, the ATM terminal 2 209 checks its own VC resource condition. If the ATM terminal 2 209 judges that the resource condition is insufficient for setting an ATM connection, the ATM terminal 2 209 generates a NHRP reply packet indicating a rejection response and transfers the NHRP reply packet to the NHS - 3 203. If the ATM terminal 2 209 judges that the resource condition is sufficient for setting an ATM connection, the ATM terminal 2 209 generates a NHRP reply packet including its own ATM address and sends the NHRP reply packet to the ATM terminal 1 208 via the NHS - 3 203, NHS - 2 202 and NHS - 1 201.

When the NHS - 3 203 receives the NHRP reply packet indicating the rejection response from the ATM terminal 2 209, the NHS - 3 203 checks its own VC resource condition. IF the NHS - 3 203 judges that the resource condition is sufficient for setting an ATM connection, the NHS - 3 203 generates a NHRP reply packet including its own ATM address and sends the NHRP reply packet to the ATM terminal 1 208 via the NHS - 2 202 and NHS - 1 201. If the NHS - 3 203 judges that the resource condition is insufficient for setting a VC, the NHS - 3 203 sends the NHRP reply packet indicating the rejection response to the NHS - 2 202 without any modification.

When the NHS - 2 202 receives the NHRP reply packet indicating the rejection response from the NHS - 3 203, the NHS - 2 203 checks its own VC resource condition. IF the NHS - 2 202 judges that the resource condition is sufficient for setting an ATM connection, the NHS - 2 generates a NHRP reply packet including its own ATM address and transfers the NHRP reply packet to the ATM terminal 1 208 via the NHS - 1 201. If the NHS - 2 202 judges that the resource condition is insufficient for setting an ATM connection, the NHS - 2 202 transfers the NHRP reply packet indicating the rejection response to the NHS - 1 201 without any modification.

When the NHS - 1 201 receives the NHRP reply packet indicating the rejection response from the NHS - 2 202, the NHS - 1 201 checks its own VC resource condition. If the NHS - 1 201 judges that the resource condition is sufficient for setting an ATM connection, the NHS - 1 201 generates a NHRP reply packet including its own ATM address and transfers the NHRP reply packet to the ATM terminal 1 208. If the NHS - 1 201 judges that the resource condition is insufficient for setting an ATM connection, the NHS - 1 201 sends the NHRP reply packet indicating the rejection response to the ATM terminal 1 208 without any modification.

When the ATM terminal 1 208 receives the NHRP reply packet indicating the rejection response, the ATM terminal 1 208 abandons transmission to the destination terminal. When the ATM terminal 1 208 receives the NHRP reply packet indicating a normal condition, the ATM terminal 1 208 sets a VC to the ATM address, i.e., ATM address of the destination ATM terminal 2 209 or one of intermediary NHS's, which is included in the NHRP reply packet. Accordingly; the ATM terminal 1 208 can transmit the IP data gram in the connection. When the NHS's receive the IP data gram, the NHS's transfer the IP data gram to the ATM terminal 2 209 similarly as in processing of the NHRP request packet.

As stated above, since the intermediary NHS's are provided according to this invention, even if the VC resource of the destination ATM terminal is insufficient, an optimal VC for transmission can be realized.

### Embodiment 3.

In embodiment 1, the NHRP request packet is transferred to the destination ATM terminal. However, when each NHRP server always monitors resource conditions of controlling ATM terminals, if the NHRP server judges that the resource condition is insufficient, the NHRP server can report the insufficient condition for transmission by sending a NHRP reply packet indicating a rejection response to an origin terminal of the NHRP request packet without an inquiry to the destination ATM terminal.

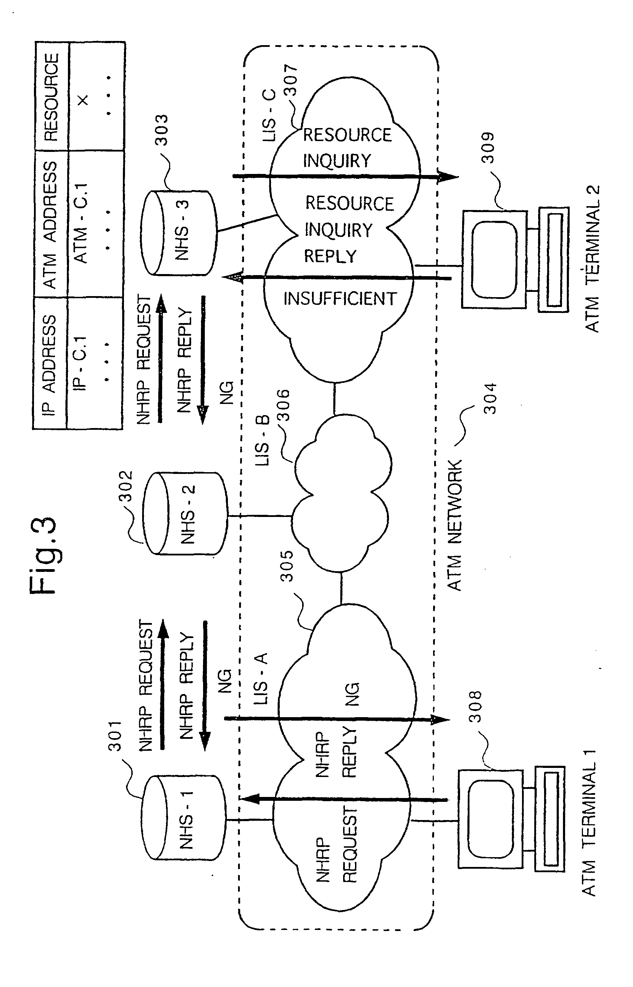

An explanatory chart of an address resolution method as another embodiment of this invention is shown in Fig. 3. In Fig. 3, a NHS - 1 301, NHS - 2 302, NHS - 3 303, and ATM network 304 are illustrated. A logical subnet LIS - A 305, which the NHS - 1 301 belongs to, a logical subnet LIS - B 306, which the NHS - 2 302 belongs to, and a logical subnet LIS - C 307, which the NHS - 3 303 belongs to are also illustrated. An ATM terminal 1 308, origin terminal, is located in the LIS - A 305, and an ATM terminal 2 309, destination terminal, is located in the LIS - C 307.

An operation of the address resolution method is explained with reference to Fig. 3.

In Fig. 3, when the ATM terminal 1 308 needs to transmit an IP data gram to the ATM terminal 2 309, the NHS - 3 303 regularly inquires the resource condition of the ATM terminal 2, and maintains the resource condition of the controlling ATM terminal 2.

The ATM terminal 1 308 sends a NHRP request packet including an IP address of the ATM terminal 2 309 to the NHS - 3 303 as in the related art. When the NHS - 3 303 receives the NHRP request packet, the NHS - 3 303 refers to the IP address included in the NHRP request packet, and recognizes that the request is addressed to the ATM terminal 2 309.

In Fig. 3, since the NHS - 3 maintains the address information and resource condition of the ATM terminal 2 309, the NHS - 3 303 generates a NHRP reply packet including the ATM address of the ATM terminal 2 309, and transfers the NHRP reply packet to the ATM terminal 1 via the NHS - 2 302 and NHS - 1 301. After the NHRP reply packet is sent to the ATM terminal 1, the NHRP reply packet is processed as in the related art.

In embodiment 3, when the NHS processes a reply to the NHRP request packet, the NHS judges based on the maintaining information of the ATM terminal and replies to the ATM terminal directly. Since a time-consuming inquiry to the ATM terminal is not performed, the reply can be processed in a high speed.

When the inquiry on the resource condition and the NHRP request are congested, the inquiry on the resource is determined to have a priority.

### Embodiment 4.

In embodiment 3, the NHS only transfers the NHRP packets. However, the NHS can also function as a router.

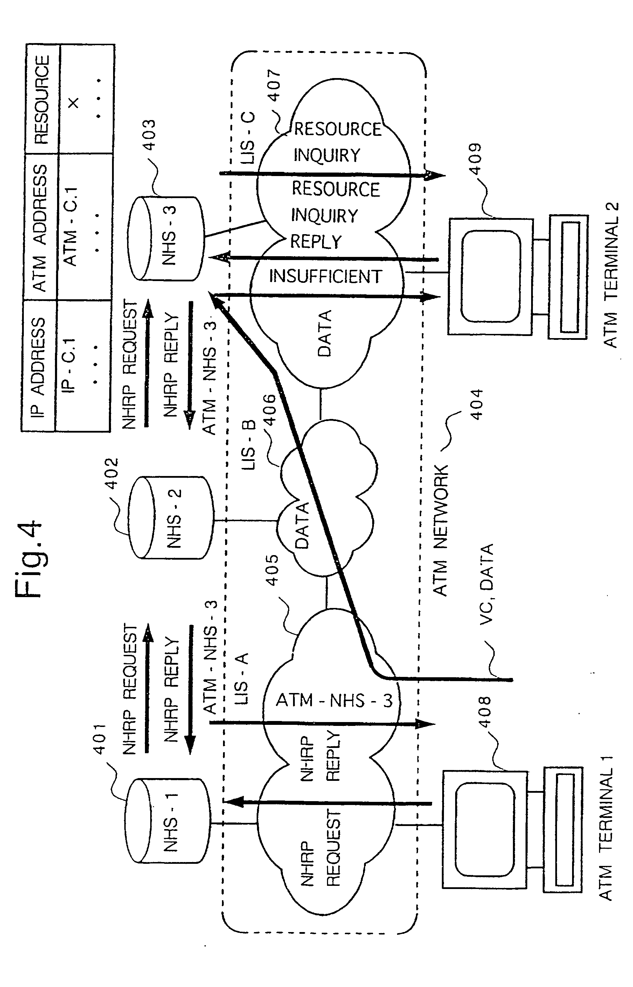

An explanatory chart of an address resolution method as another embodiment of this invention is shown in Fig. 4. In Fig. 4, a NHS - 1 401, NHS - 2 402, NHS - 3 403, and ATM network 404 are illustrated. A logical subnet LIS - A 405, which the NHS - 1 401 belongs to, a logical subnet LIS - B 406, which the NHS - 2 402 belongs to, and a logical subnet LIS - C 407, which the NHS - 3 403 belongs to are also illustrated. An ATM terminal 1 408, origin terminal, is located in the LIS - A 405, and an ATM terminal 2 409, destination terminal, is located in the LIS - C 407.

An operation of the address resolution method is explained with reference to Fig. 4.

In Fig. 4, when the ATM terminal 1 408 needs to transmit an IP data gram to the ATM terminal 2 409, the ATM terminal 1 401 sends a NHRP request packet including an IP address of the ATM terminal 2 409 to the NHS - 3 403 as in embodiment 3. When the NHS - 3 403 receives the NHRP request packet, the NHS - 3 403 refers to the IP address included in the NHRP request packet, and recognizes that the request is addressed to the ATM terminal 2 409.

The NHS - 3 403 checks the maintaining VC resource condition of the ATM terminal 2 409. If the NHS - 3 403 judges that the resource condition of the ATM terminal 2 409 is sufficient for setting an ATM connection, the NHS - 3 403 generates a NHRP reply packet, and transfers the NHRP reply packet to the ATM terminal 1 408 via the NHS - 2 402 and NHS - 1 401. On the contrary, if the NHS - 3 403 judges that the VC resource condition of the ATM terminal 2 409 is insufficient, the NHS - 3 403 judges its own VC resource condition.

If the NHS - 3 403 judges that the VC resource condition is sufficient for setting an ATM connection, the NHS - 3 403 generates a NHRP reply packet including its own ATM address, and transfers the NHRP reply packet to the ATM terminal 1 408 via the NHS - 2 402 and NHS - 1 401. On the contrary, if the NHS - 3 403 judges that the VC resource condition is insufficient for setting the ATM connection, the NHS - 3 403 transfers a NHRP reply packet indicating a rejection response to the NHS - 2 402 without any modification. After the NHRP reply packet is sent to the NHS - 2 402, the NHRP reply packet is processed as in embodiment 2.

In embodiment 4, even if the VC resource in the destination ATM terminal is insufficient, an optimal VC can be provided by using intermediary NHS's.

### Embodiment 5.

In embodiment 3, the NHS's always monitor the resource conditions of the ATM terminals. However, it is also possible that the ATM terminals monitor the resource conditions by themselves and report the resource conditions to the NHS's.

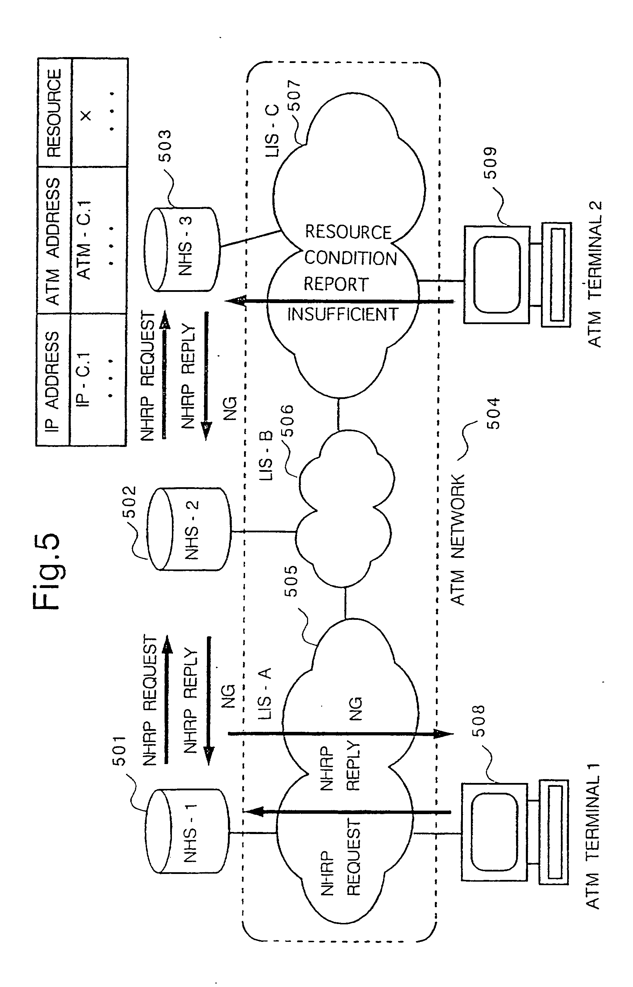

An explanatory chart of an address resolution method as another embodiment of this invention is shown in Fig. 5. In Fig. 5, a NHS - 501, NHS - 2 502, NHS - 3 503, and ATM network 504 are illustrated. A logical subnet LIS - A 505, which the NHS - 1 501 belongs to, a logical subnet LIS - B 506, which the NHS - 2 502 belongs to, and a logical subnet LIS - C 507, which the NHS - 3 503 belongs to are also illustrated. An ATM terminal 1 508, origin termi nal, is located in the LIS - A 505, and an ATM terminal 2 509, destination terminal, is located in the LIS - C 507.

An operation of the address resolution method is explained with reference to Fig. 5.

In Fig. 5, the ATM terminal 1 508 needs to transmit an IP data gram to the ATM terminal 2 509. Each ATM terminal monitors its own VC resource condition regularly and reports the VC resource condition to an administrating NHS when the condition is changed. The reported NHS maintains the resource condition of the controlling ATM terminals. NHRP packets in this embodiment are processed as in embodiment 3.

In embodiments 3 and 4, since the NHS inquires the terminal only regularly, even if the condition of the terminal is changed, the information on the condition of the terminal maintained by the NHS is not updated until a next inquiry. Therefore, when a NHRP request packet is sent to the NHS before updating, an error might be caused in the processing of the reply in the NHS. However, in embodiment 5, since the NHS always maintains a correct condition, an accuracy in the reply can be improved.

### Embodiment 6.

In embodiment 3, the NHS's only transfer the NHRP packets. However, the NHS's can also function as routers.

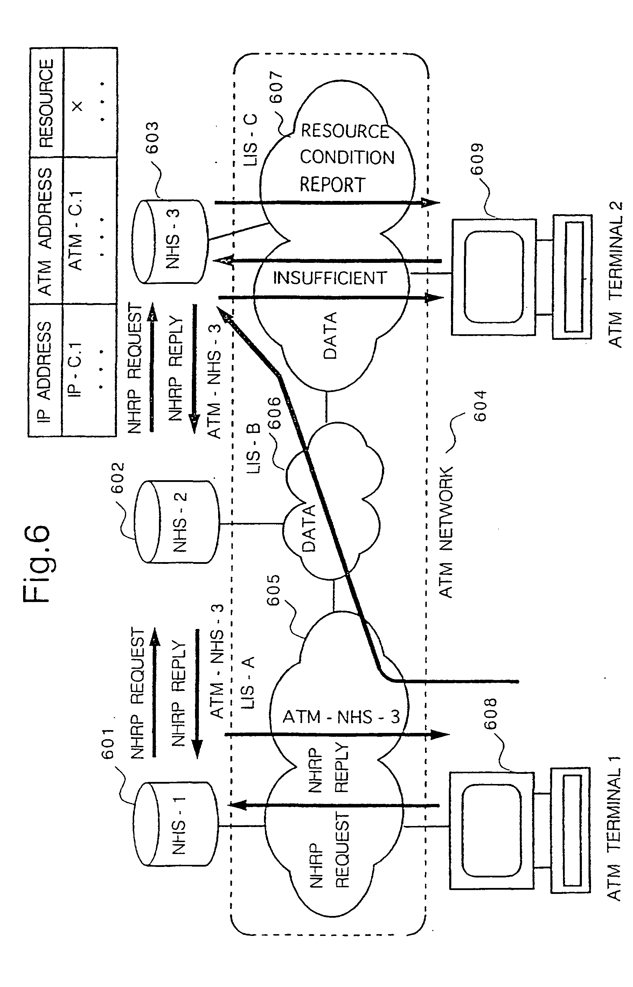

An explanatory chart of an address resolution method as another embodiment of this invention is shown in Fig. 6. In Fig. 6, a NHS - 1 601, NHS - 2 602, NHS - 3 603, and ATM network 604 are illustrated. A logical subnet LIS - A 605, which the NHS - 1 601 belongs to, a logical subnet LIS - B 606, which the NHS - 2 602 belongs to, and a logical subnet LIS - C 607, which the NHS - 3 603 belongs to are also illustrated. An ATM terminal 1 608, origin terminal, is located in the LIS - A 605, and an ATM terminal 2 609, destination terminal, is located in the LIS - C 607.

An operation of the address resolution method is explained with reference to Fig. 6.

In Fig. 6, the ATM terminal 1 608 needs to transmit an IP data gram to the ATM terminal 2 609. The ATM terminal 1 608 sends a NHRP request packet including an IP address of the ATM terminal 2 609 to the NHS - 3 603 as in embodiment 3. When the NHS - 3 603 receives the NHRP request packet, the NHS - 3 603 checks the IP address included in the NHRP request packet and recognizes that the request is addressed to the ATM terminal 2 609.

The NHS - 3 603 checks the maintaining VC resource condition of the ATM terminal 2 609. If NHS - 3 603 judges that the resource condition is sufficient for setting a VC, the NHS - 3 603 generates a NHRP reply packet, and transfers the NHRP reply packet to the ATM terminal 1 608 via the NHS - 2 602 and NHS - 1 601.

If the NHS - 3 603 judges that the resource condition is insufficient for setting a VC, the NHS - 3 checks its own VC resource condition. If the NHS - 3 603 judges that its own VC resource condition is sufficient for setting an ATM connection, the NHS - 3 603 generates a NHRP reply packet including its own ATM address, and transfers the NHRP reply packet to the ATM terminal 1 608 via the NHS - 2 602 and NHS - 1 601. If the NHS - 3 603 judges that its own VC resource condition is insufficient for setting an ATM connection, the NHS - 3 603 sends the NHRP reply packet indicating a rejection response to the NHS - 2 602 without any modification. Then, the NHRP reply packet is processed as in embodiment 2.

In embodiment 6, even if the VC resource condition in the destination ATM terminal is insufficient, an optimal VC for transmission can be provided by using an intermediary NHS.

### Embodiment 7.

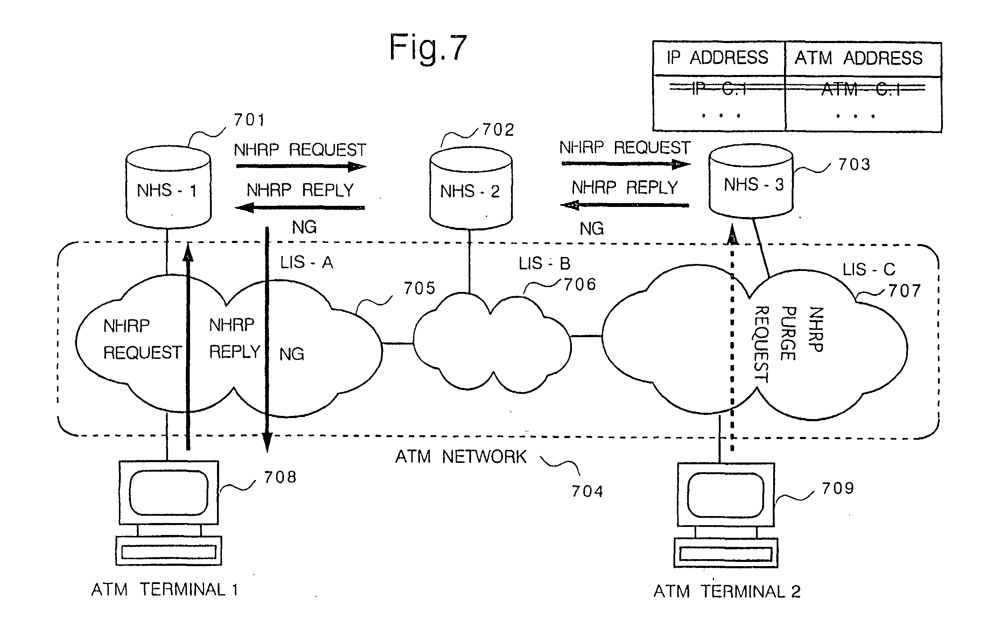

An explanatory chart of an address resolution method as another embodiment of this invention is shown in Fig. 7. In Fig. 7, a NHS - 1 701, NHS - 2 702, NHS - 3 703, and ATM network 704 are illustrated. A logical subnet LIS - A 705, which the NHS - 1 701 belongs to, a logical subnet LIS - B 706, which the NHS - 2 702 belongs to, and a logical subnet LIS - C 707, which the NHS - 3 703 belongs to are also illustrated. An ATM terminal 1 708, origin terminal, is located in the LIS - A 705, and an ATM terminal 2 709, destination terminal, is located in the LIS - C 707.

An operation of the address resolution method is explained with reference to Fig. 7.

In embodiments 1 - 6, an addition or modification to NHRP functions of each NHS is necessary for reporting the resource condition. However, the resource condition can be also reported by using NHRP purge request packets in the ATM terminals.

In Fig. 7, the ATM terminal 1 708 needs to send an IP data gram to the ATM terminal 2 709.

Since the ATM terminal 2 709 monitors its own resource condition regularly, if the resource condition becomes insufficient for setting a VC, the ATM terminal 2 709 sends a NHRP purge request packet to the NHS - 3 703. When the NHS - 3 703 receives the NHRP purge request packet, the NHS - 3 703 deletes the information on the ATM terminal 2 709 from the controlling NHRP server table for controlling addresses. Then, the NHRP packet is processed as in the related art. On the contrary, if the resource condition becomes sufficient for setting a VC, the ATM terminal 2 709 sends a NHRP register request packet to the NHS - 3 703. The NHS - 3 703 registers the information on the ATM terminal 2 709 in the controlling NHRP server table for controlling addresses.

In embodiment 7, at the time of resolving address, the resource condition at the destination terminal can be known by extending functions of the ATM terminals without modifying the functions of the NHS's.

### Embodiment 8.

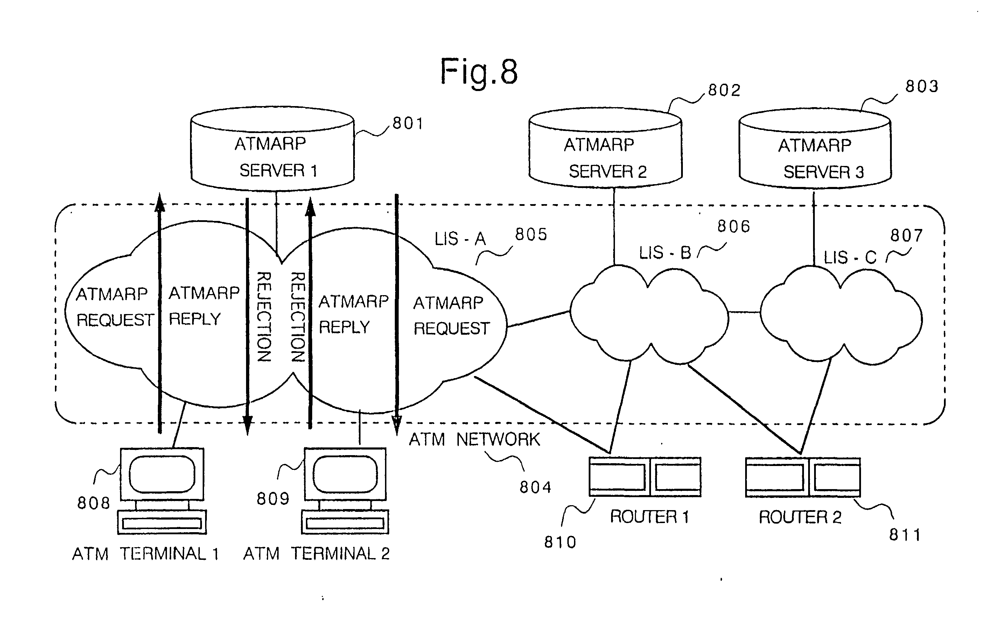

An explanatory chart of another embodiment of address resolution method according to this invention is shown in Fig. 8. In Fig. 8, the ATMARP is used. In Fig. 8, an ATMARP server 1 801, ATMARP server 2 802, ATMARP server 3 803, and ATM network 804 are illustrated. A logical subnet LIS - A 805, which the ATMARP server 1 801 belongs to, a logical subnet LIS - B 806, which the ATMARP server 2 802 belongs to, and a logical subnet LIS - C 807, which the ATMARP server 3 803 belongs to are also illustrated. In Fig. 8, an ATM terminal 1 808, origin terminal, and an ATM terminal 2 809, destination terminal, are both located in the LIS - A 805. A roucer 1 810 is provided between the LIS - A 805 and the LIS - B 806, and a router 2 811 is provided between the LIS - B 806 and the LIS - C 807. In Fig. 8, ATM switches, connecting lines, etc. constituting the ATM network are omitted.

An operation of the address resolution method is explained with reference to Fig. 8.

In Fig. 8, the ATM terminal 1 808 needs to send an IP data gram to the ATM terminal 2 809. The ATM terminal 1 808 sends an ATMARP request packet including an IP address of the ATM terminal 2 809 to the ATMARP server 1 801. When the ATMARP server 1 801 receives the ATMARP request packet from the ATM terminal 1 801, the ATMARP server 1 801 checks the IP address included in the ATMARP request packet, and recognizes that the request is addressed to the ATM terminal 2 809.

Since the ATMARP server 1 801 maintains an address information of the ATM terminal 2 809 and a VC with the ATM terminal 2 809, the ATMARP server 1 801 transfers the ATMARP request packet to the ATM terminal 2 809. When the ATM terminal 2 809 receives the ATMARP request packet, the ATM terminal 2 809 judges its own VC resource condition.

If the ATM terminal 2 809 judges that the resource condition is sufficient for setting an ATM connection, the ATM terminal 2 809 generates an ATMARP reply packet including its own ATM address, and transfers the ATMARP reply packet to the ATMARP server 1 801. If the ATM terminal 2 809 judges that the resource condition is insufficient for setting an ATM connection, the ATM terminal 2 809 generates an ATMARP reply packet indicating a rejection response, and transfers the ATMARP reply packet to the ATMARP server 1 801. After then, the ATMARP reply packet is processed as in the related art.

In embodiment 8, since the resource condition at the destination ATM terminal is replied at the time of resolving the address, it is possible to judge if the ATM connection can be set even before the origin ATM terminal sets a VC to the destination ATM terminal.

### Embodiment 9.

In embodiment 8, the ATMARP server transfers only the ATMARP packets. However, the ATMARP server can also transfer an IP data gram.

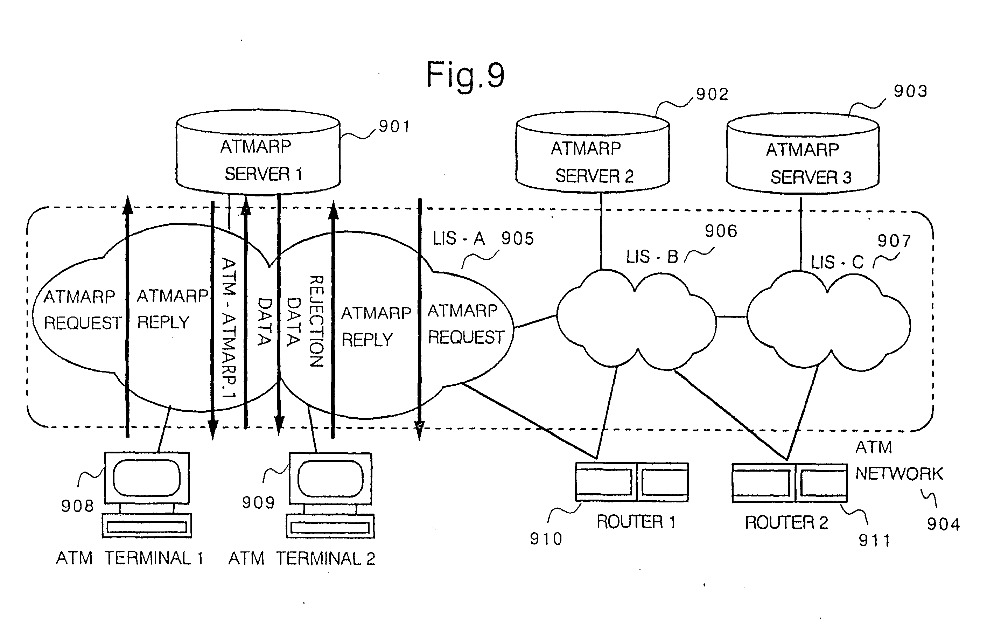

An explanatory chart of another embodiment of address resolution method according to this invention is shown in Fig. 9. In Fig. 9, an ATMARP server 1 901, ATMARP server 2 902, ATMARP server 3 903, and ATM network 904 are illustrated. A logical subnet LIS - A 905, which the ATMARP server 1 901 belongs to, a logical subnet LIS - B 906, which the ATMARP server 2 902 belongs to, and a logical subnet LIS - C 907, which the ATMARP server 3 903 belongs to are also illustrated. In Fig. 9, an ATM terminal 1 908, origin terminal, and an ATM terminal 2 909, destination terminal, are both located in the LIS - A 905. A router 1 910 is provided between the LIS - A 905 and the LIS - B 906, and a router 2 911 is provided between the LIS - B 906 and the LIS - C 907. In Fig. 9, ATM switches, connecting lines, etc. constituting the ATM network are omitted.

An operation of the address resolution method is explained with reference to Fig. 9.

In Fig. 9, the ATM terminal 1 needs to send an IP data gram to the ATM terminal 2. The ATM terminal 1 908 sends an ATMARP request packet including an IP address of the ATM terminal 2 909 to the ATMARP server 1 901. When the ATMARP server 1 901 receives the ATMARP request packet, the ATMARP server 1 901 checks the IP address included in the ATMARP request packet and recognizes that the request is addressed to the ATM terminal 2 909.

The ATMARP server 1 901 transfers the ATMARP request packet to the ATM terminal 2 909. When the ATM terminal 2 909 receives the ATMARP request packet, the ATM terminal 2 909 checks its own VC resource condition. If the ATM terminal 2 909 judges that the VC resource condition is insufficient for setting an ATM connection, the ATM terminal 2 909 generates an ATMARP reply indicating a rejection response, and transfers the ATMARP reply packet to the ATMARP server 1 901. If the ATM terminal 2 909 judges that the VC resource condition is sufficient for setting the ATM connection, the ATM terminal 2 909 generates an ATMARP reply packet including its own ATM address, and transfers the ATMARP reply packet to the ATMARP server 1 901.

When the ATMARP server 1 901 receives the ATMARP reply packet, the ATMARP server 1 901 checks its own VC resource condition. If the ATMARP server 1 901 judges that the VC resource condition is sufficient for setting an ATM connection, the ATMARP server 1 901 generates an ATMARP reply packet including its own ATM address, and transfers the ATMARP reply packet to the ATMARP server 1 908. If the ATMARP server 1 901 judges that the resource condition is insufficient for setting a VC, the ATMARP server 1 901 transfers the ATMARP reply packet indicating the rejection response to the ATM terminal 1 908 without any modification.

When the ATM terminal 1 908 receives the ATMARP reply packet, if the ATMARP reply packet indicates a rejection response, the ATM terminal 1 908 abandons a transmission to the destination. If the ATMARP reply packet indicates a normal condition, the ATM terminal 1 908 sets a VC to the ATM address (ATM address of the destination ATM terminal 2 909 or ATMARP server 1 901) included in the reply, and sends an IP data gram which the ATM terminal 1 908 needs to transmit in the connection. When the ATMARP server 1 901 receives the IP data gram, the ATMARP server 1 901 transfers the IP data gram to the ATM terminal 2 908 as in the processing of the ATMARP packets.

In embodiment 9, even if the VC resource condition at the destination ATM terminal is insufficient, a VC for transmission can be provided by using an intermediary ATMARP server.

### Embodiment 10.

In embodiment 8, the ATMARP request packet is transferred to the destination ATM terminal. However, it is also possible that each ATMARP server always monitors the resource conditions of its controlling ATM terminals. If the ATMARP server judges that the resource conditions of the ATM terminals are insufficient, the ATMARP server can report the untransmittable condition by transmitting an ATMARP reply packet indicating a rejection response.

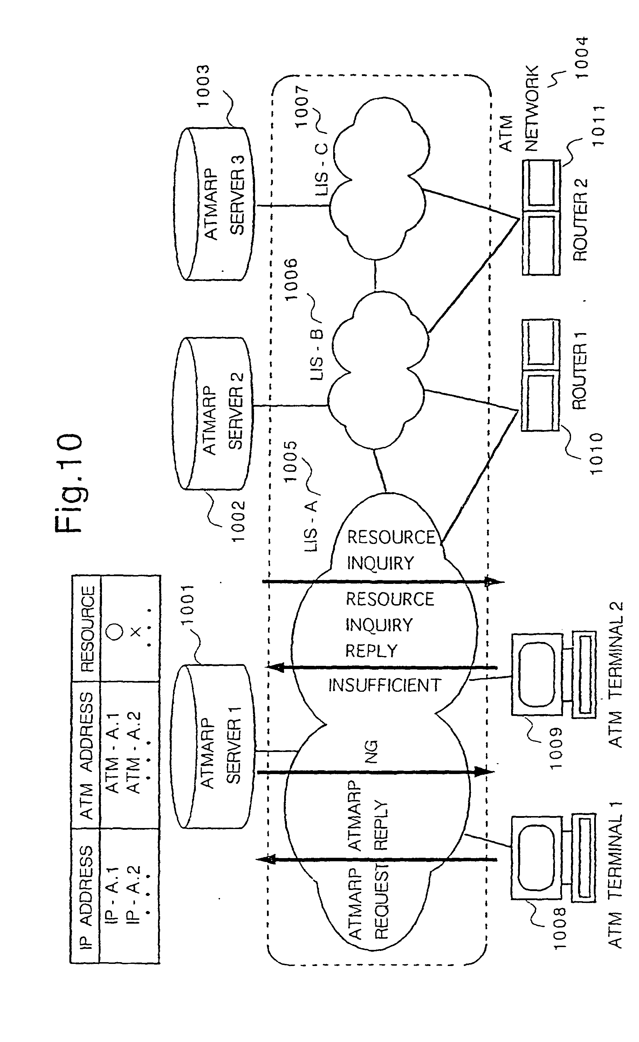

An explanatory chart of another embodiment of address resolution method according to this invention is shown in Fig. 10. In Fig. 10, an ATMARP server 1 1001, ATMARP server 2 1002, ATMARP server 3 1003, and ATM network 1004 are illustrated. A logical subnet LIS - A 1005, which the ATMARP server 1 1001 belongs to, a logical subnet LIS - B 1006, which the ATMARP server 2 1002 belongs to, and a logical subnet LIS - C 1007, which the ATMARP server 3 1003 belongs to are also illustrated. In Fig. 10, an ATM terminal 1 1008, origin terminal, and an ATM terminal 2 1009, destination terminal, are both located in the LIS - A 1005. A router 1 1010 is provided between the LIS - A 1005 and the LIS - B 1006, and a router 2 1011 is provided between the LIS - B 1006 and the LIS - C 1007. In Fig. 10, ATM switches, connecting lines, etc. constituting the ATM network are omitted.

An operation of the address resolution method is explained with reference to Fig. 10.

In Fig. 10, the ATM terminal 1 1008 needs to send an IP data gram to the ATM terminal 2 1009. The ATMARP server 1 1001 inquires a VC resource condition of the ATM terminal 2 1002 regularly for maintaining resource conditions of its controlling ATM terminals. The ATM terminal 1 1008 sends an ATMARP request packet including an IP address of the ATM terminal 2 to the ATMARP server 1 1001 as in the related art. When the ATMARP server 1 1001 receives the ATMARP request packet, the ATMARP server 1 1001 checks the IP address included in the ATMARP request packet, and recognizes that the request is addressed to the ATM terminal 2 1009.

Since the ATMARP server 1 1001 maintains the address information and VC resource condition of the ATM terminal 2 1009, the ATMARP server 1 1001 generates an ATMARP reply packet, and transfers the ATMARP reply packet to the ATM terminal 1 1008. After then, the ATMARP reply packet is processed as in the related art.

In embodiment 10, when the ATMARP server replies to the received ATMARP request packet, the ATMARP server judges based on the maintaining ATM terminal information without a time-consuming inquiry to the ATM terminals. Therefore, the reply can be processed in a high speed.

### Embodiment 11.

In embodiment 10, the ATMARP server only transfers the ATMARP packets. However, the ATMARP server can also transfer an IP packet.

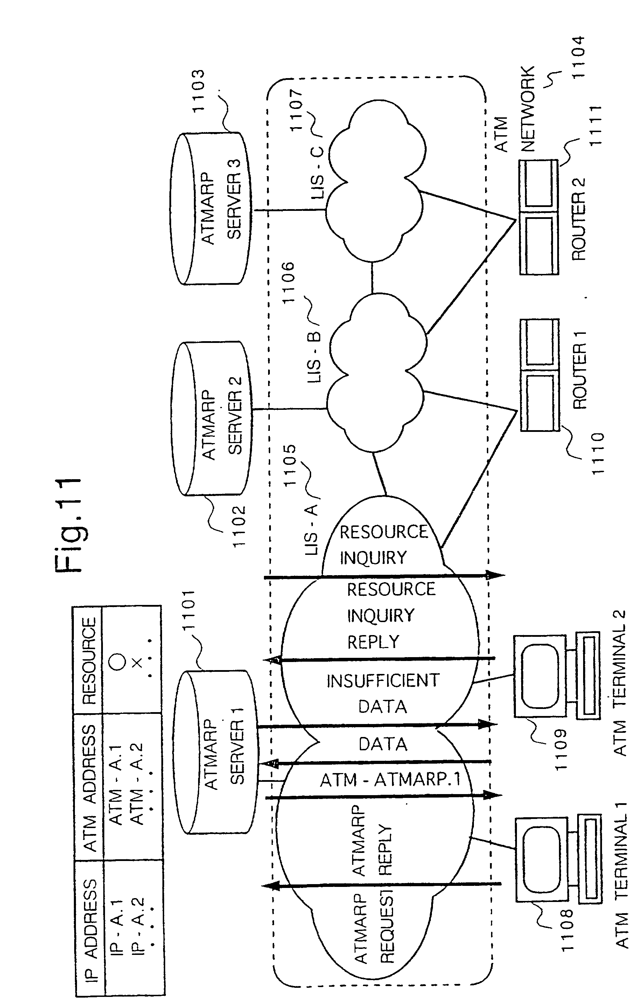

An explanatory chart of another embodiment of address resolution method according to this invention is shown in Fig. 11. In Fig. 11, an ATMARP server 1 1101, ATMARP server 2 1102, ATMARP server 3 1103, and ATM network 1104 are illustrated. A logical subnet LIS - A 1105, which the ATMARP server 1 1101 belongs to, a logical subnet LIS - B 1106, which the ATMARP server 2 1102 belongs to, and a logical subnet LIS - C 1107, which the ATMARP server 3 1103 belongs to are also illustrated. In Fig. 11, an ATM terminal 1 1108, origin terminal, and an ATM terminal 2 1109, destination terminal, are both located in the LIS - A 1105. A router 1 1110 is provided between the LIS - A 1105 and the LIS - B 1106, and a router 2 1111 is provided between the LIS - B 1106 and the LIS - C 1107. In Fig. 11, ATM switches, connecting lines, etc. constituting the ATM network are omitted.

The operation of the address resolution method is explained with reference to Fig. 11. In Fig. 11, the ATM terminal 1 1108 needs to send an IP data gram to the ATM terminal 2 1109. The ATM terminal 1 1108 sends an ATMARP request packet including an IP address of the ATM terminal 2 1109 to the ATMARP server 1 1101 as in embodiment 10. When the ATMARP server 1 1101 receives the ATMARP request packet, the AT MARP server 1 1101 checks the IP address included in the ATMARP request packet, and recognizes that the request is addressed to the ATM terminal 2 1109.

In this case, the ATMARP server 1 1101 checks a maintaining VC resource condition of the ATM terminal 2 1109. If the ATMARP server 1 1101 judges that the VC resource condition of the ATM terminal 2 1109 is sufficient for setting an ATM connection, the ATMARP server 1 1101 generates an ATMARP reply packet, and transfers the packet to the ATM TERMINAL 1 1108.

On the contrary, if the ATMARP server 1 1101 judges that the VC resource condition of the ATM terminal 2 is insufficient for setting the ATM connection, the ATMARP server 1 1101 checks its own VC resource condition. If the ATMARP server 1 1101 judges that its resource condition is sufficient for setting an ATM connection, the ATMARP server 1 1101 generates an ATMARP reply packet including its own ATM address, and sends the reply packet to the ATM terminal 1 1108. If the ATMARP server 1 1101 judges that the resource condition is insufficient for setting a VC, the ATMARP server 1 1101 generates an ATMARP reply packet indicating a rejection response, and sends the reply packet to the ATM terminal 1 1108. After then, the ATMARP reply packet is processed as in embodiment 9.

In embodiment 11, even if the VC resource condition at the destination ATM terminal is insufficient, an optimal VC for transmission can be provided by using an intermediary ATMARP server.

### Embodiment 12.

In embodiment 10, the ATMARP server always monitors the resource condition of the ATM terminals. However, it is also possible that the ATM terminals monitor own resource conditions and report the conditions to the ATMARP server.

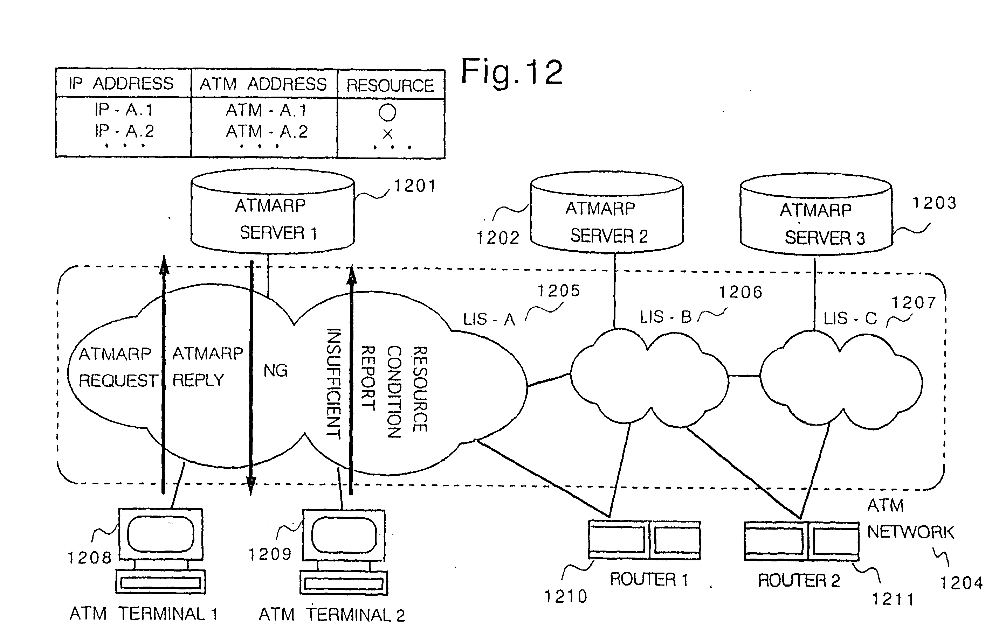

An explanatory chart of another embodiment of address resolution method according to this invention is shown in Fig. 12. In Fig. 12, an ATMARP server 1 1201, ATMARP server 2 1202, ATMARP server 3 1203, and ATM network 1204 are illustrated. A logical subnet LIS - A 1205, which the ATMARP server 1 1201 belongs to, a logical subnet LIS - 3 1206, which the ATMARP server 2 1202 belongs to, and a logical subnet LIS - C 1207, which the ATMARP server 3 1203 belongs to are also illustrated. In Fig. 12, an ATM terminal 1 1208, origin terminal, and an ATM terminal 2 1209, destination terminal, are both located in the LIS - A 1205. A router 1 1210 is provided between the LIS - A 1205 and the LIS - B 1206, and a router 2 1211 is provided between the LIS - B 1206 and the LIS - C 1207. In Fig. 12, ATM switches, connecting lines, etc. constituting the ATM network are omitted.

The operation of the address resolution method is explained with reference to Fig. 12. In Fig. 12, the ATM terminal 1 needs to send an IP data gram to the ATM terminal 2. Each ATM terminal monitors its own resource condition regularly, and when the condition is changed, the ATM terminal reports the change to the ATMARP server. The reported ATMARP server maintains the resource condition of its controlling ATM terminals. The ATMMARP packets in this embodiment are processed as in embodiment 10.

In embodiment 12, since the ATMARP server always maintains a correct condition of the ATM terminals, an accuracy of the response can be improved.

### Embodiment 13.

In embodiment 12, the ATMARP server only transfers the ATMARP packet. However, the ATMARP server can also transfer an IP packet.

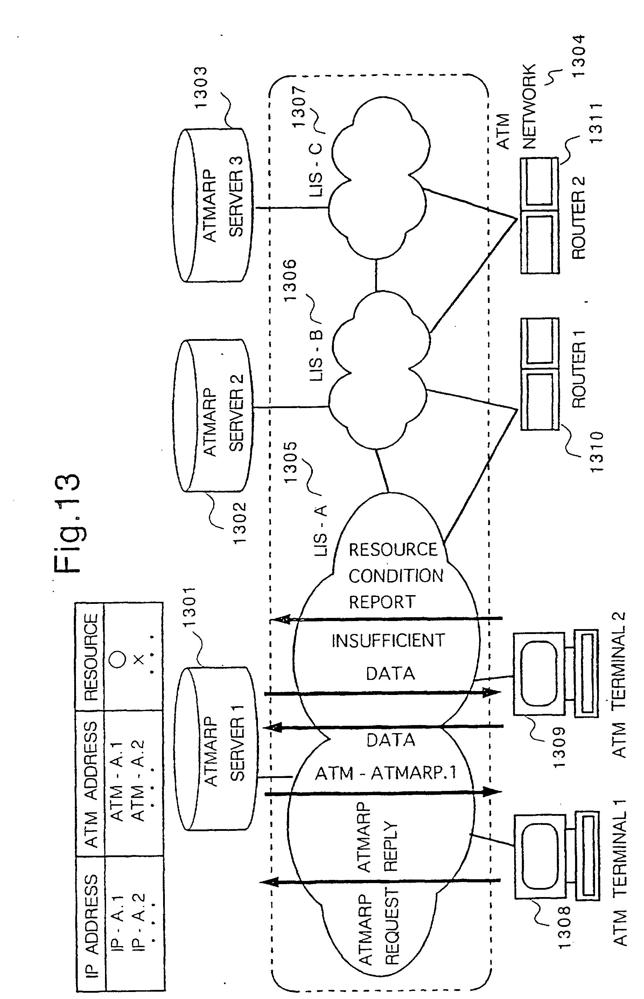

An explanatory chart of another embodiment of address resolution method according to this invention is shown in Fig. 13. In Fig. 13, an ATMARP server 1 1301, ATMARP server 2 1302, ATMARP server 3 1303, and ATM network 1304 are illustrated. A logical subnet LIS - A 1305, which the ATMARP server 1 1301 belongs to, a logical subnet LIS - B 1306, which the ATMARP server 2 1302 belongs to, and a logical subnet LIS - C 1307, which the ATMARP server 3 1303 belongs to are also illustrated. In Fig. 13, an ATM terminal 1 1308, origin terminal, and an ATM terminal 2 1309, destination terminal, are both located in the LIS - A 1305. A router 1 1310 is provided between the LIS - A 1305 and the LIS - B 1306, and a router 2 1311 is provided between the LIS - B 1306 and the LIS - C 1307. In Fig. 13, ATM switches, connecting lines, etc. constituting the ATM network are omitted.

The operation of the address resolution method is explained with reference to Fig. 13. In Fig. 13, the ATM terminal 1 1308 needs to send an IP data gram to the ATM terminal 2 1309. As in embodiment 12, the ATM terminal 1 1308 sends an ATMARP request packet including an IP address of the ATM terminal 2 1209 to the ATM terminal 2 1309. When the ATMARP server 1 1301 receives the ATMARP request packet, the ATMARP server 1 1301 checks the IP address included in the ATMARP request packet, and recognizes that the request packet is addressed to the ATM terminal 2 1309.

Then, the ATMARP server 1 checks a maintaining VC resource condition of the ATM terminal 2 1309. If the ATMARP server 1 judges that the resource condition is sufficient for setting a VC, the ATMARP server 1 generates an ATMARP reply packet, and sends back the ATMARP reply packet to the ATM terminal 1 1308. If the ATMARP server 1 judges that the resource condition is insufficient for setting a VC, the ATMARP server 1 generates an ATMARP reply packet including its own ATM address, and sends the ATMARP reply packet to the ATM terminal 1 1308. After then, the ATMARP reply packet is processed as in embodiment 9.

In embodiment 13, even if the VC resource condition at the destination ATM terminal is insufficient, a VC for the transmission can be provided by using an intermediary ATMARP server.

Having thus described several particular embodiments of the invention, various alterations, modifications, and improvements will readily occur to those skilled in the art. Such alterations, modifications, and improvements are intended to be part of this disclosure, and are intended to be within the scope of the invention. Accordingly, the foregoing description is by way of example only and is limited only as defined in the following claims and the equivalents thereto.

## Claims

1. An address resolution method, wherein ATM (Asynchronous Transfer Mode) addresses of ATM terminals connected to an ATM network are obtained from IP addresses of the ATM terminals, comprising the steps of:
receiving a destination ATM address request for requesting an ATM address of a destination ATM terminal from an origin ATM terminal;
judging if a resource condition at the destination ATM terminal is sufficient for connecting to the origin ATM terminal; and
if the resource condition at the destination ATM terminal is sufficient, transmitting the ATM address of the destination ATM terminal to the origin ATM terminal.

2. The address resolution method according to claim 1, wherein a plurality of ATM switches, NHRP (Next Hop Address Resolution Protocol) servers and ATM terminals are arbitrarily connected to the ATM network, comprising the steps of:
when one of the NHRP servers receives a NHRP request packet from an origin ATM terminal, if the NHRP server controls a destination ATM terminal at an ATM address included in the NHRP request packet, transferring the NHRP request packet directly to the destination ATM terminal, and if the NHRP server doesn't control the destination ATM terminal, transferring the NHRP request packet to the destination ATM terminal via at least one of the plurality of NHRP servers;
when the destination ATM terminal receives the NHRP request packet, checking its own VC (Virtual Connection) resource condition, and if the destination ATM terminal judges that its VC resource condition is sufficient for connecting, transmitting a NHRP reply packet including its own ATM address, and if the destination ATM terminal judges that its VC resource condition is insufficient for connecting, transmitting a NHRP reply packet indicating a rejection response; and
when the NHRP server receives the NHRP reply packet from the destination ATM terminal, if the NHRP server controls the origin ATM terminal, transferring the NHRP reply packet directly to the origin ATM terminal, and if the NHRP server doesn' t control the origin ATM terminal, transferring the NHRP reply packet to the origin ATM terminal via at least one of the plurality of NHRP servers.

3. The address resolution method according to claim 1, wherein a plurality of ATM switches, NHRP servers and ATM terminals are arbitrarily connected to the ATN network, comprising the steps of:
always monitoring and maintaining VC resource conditions of controlling ATM terminals by the NHRP servers; and
when one of the NHRP servers receives a NHRP request packet, judging a VC resource condition at a destination terminal, and if the NHRP server judges that the VC resource condition is insufficient for connecting, transmitting a NHRP reply packet indicating a rejection response, and if the NHRP server judges that the VC resource condition is sufficient for connecting, transmitting a normal NHRP reply packet.

4. The address resolution method according to claim 1, wherein a plurality of ATM switches, NHRP servers and ATM terminals are arbitrarily connected to the ATM network, comprising the steps of:
always monitoring VC resource conditions of the ATM terminals by the ATM terminals;
if one of the ATM terminals judges that its VC resource conditions is insufficient for connecting, transmitting a NHRP register request packet indicating an unconnectable condition to one of the NHRP servers which controls the ATM terminal, and when the ATM terminal judges that its VC resource condition has become sufficient for connecting, transmitting a normal NHRP register request packet to the NHRP server which controls the ATM terminal; and
when the NHRP server receives a NHRP request packet from an origin ATM terminal, judging a VC resource condition at a destination ATM terminal, and if the NHRP server judges that the VC resource condition is insufficient, transmitting a NHRP reply packet indicating a rejection response, and if the NHRP server judges that the VC resource condition is sufficient, transmitting a normal NHRP reply packet.

5. The address resolution method according to claim 1, wherein a plurality of ATM switches, NHRP servers and ATM terminals are connected to the ATM network, comprising the steps of:
always monitoring VC resource conditions of the ATM terminals by the ATM terminals; and
if one of the ATM terminals judges that the resource condition is insufficient for connecting, transmitting a NHRP purge request packet, and when the ATM terminal judges that the VC resource condition has become sufficient for connecting, transmitting a NHRP register request packet.

6. The address resolution method according to claim 1, wherein a plurality of ATM switches, ATMARP (ATM Address Resolution Protocol) servers and ATM terminals are arbitrarily connected to the ATM network, comprising the steps of:
when one of the ATMARP servers receives an ATMARP request packet, transferring the ATMARP request packet to a destination ATM terminal at an ATM address included in the ATMARP request packet; and
when the destination ATM terminal receives the ATMARP request packet, judging its own VC resource condition, and if the destination ATM terminal judges that its VC resource condition is sufficient for connecting, transmitting an ATMARP reply packet including its own ATM address, and if the destination ATM terminal judges that its VC resource condition is insufficient for connecting, transmitting an ATMARP reply packet indicating a rejection response.

7. The address resolution method according to claim 1, wherein a plurality of ATM switches, ATMARP servers and ATM terminals are arbitrarily connected to the ATM network, comprising the steps of:
always monitoring and maintaining VC resource conditions of controlling ATM terminals by the ATMARP servers; and
when one of the ATMARP servers receives an ATMARP request packet from an origin ATM terminal, judging a VC resource condition at a destination ATM terminal, and if the ATMARP server judges that the VC resource condition is insufficient for connecting, transmitting an ATMARP reply packet indicating a rejection response, and if the ATMARP server judges that the VC resource condition is sufficient for connecting, transmitting a normal ATMARP reply packet.

8. The address resolution method according to claim 1, wherein a plurality of ATM switches, ATMARP servers and ATM terminals are arbitrarily connected to the ATM network, comprising the steps of:
always monitoring VC resource conditions of the ATM terminals by the ATM terminals;
if one of the ATM terminals judges that its VC resource condition is insufficient for connecting, transmitting an ATMARP request packet indicating an unconnectable condition, and when the ATM terminal judges that the VC resource condition has become sufficient for connecting, transmitting a normal ATMARP request packet; and
when one of the ATMARP servers receives the ATMARP request packet from an origin ATM terminal, judging a VC resource condition a a destination ATM terminal, and if the ATMARP server judges that the VC resource condition is insufficient for connecting, transmitting an ATMARP reply packet indicating a rejection response, and if the ATMARP server judges that the VC resource condition is sufficient for connecting, transmitting a normal ATMARP reply packet.

9. An address resolution system, wherein ATM addresses of ATM terminals connected to an ATM network are obtained from IP addresses of the ATM terminals, comprising a server for receiving a destination ATM address request for requesting an ATM address of a destination ATM terminal from an origin ATM terminal, judging if a resource condition at the destination ATM terminal is sufficient for connecting to the origin ATM terminal, and if the resource condition at the destination ATM terminal is sufficient, transmitting the ATM address of the destination ATM terminal to the origin ATM terminal.

## Patentansprüche

1. Adressenauflösungsverfahren, bei dem ATM(asynchroner Übertragungsbetrieb)-Adressen von ATM-Endgeräten, die mit einem ATM-Netzwerk verbunden sind, aus IP-Adressen der ATM-Endgeräte erhalten werden, welches die Schritte aufweist:
Empfangen einer ATM-Bestimmungsadressen-Anforderung zum Anfordern einer ATM-Adresse eines ATM-Bestimmungsendgeräts von einem ATM-Ursprungsendgerät;
Beurteilen, ob eine Ressourcenbedingung bei dem ATM-Bestimmungsendgerät ausreichend ist für eine Verbindung mit den ATM-Ursprungsendgerät; und
wenn die Ressourcenbedingung bei dem ATM-Bestimmungsendgerät ausreichend ist, Übertragen der ATM-Adresse des ATM-Bestimmungsendgeräts zu dem ATM-Ursprungsendgerät.

2. Adressenauflösungsverfahren nach Anspruch 1, bei dem mehrere ATM-Schalter, NHRP(Protokoll für Auflösung der nächsten Sprungadresse)-Server und ATM-Endgeräte willkürlich mit dem ATM-Netzwerk verbunden sind, welches die Schritt aufweist:
wenn einer der NHRP-Server ein NHRP-Anforderungspaket von einem ATM-Ursprungsendgerät empfängt, wenn der NHRP-Server ein ATM-Bestimmungsendgerät bei einer ATM-Adresse, die in dem NRHP-Anforderungspaket enthalten ist, steuert, Übertragen des NHRP-Anforderungspakets direkt zu dem ATM-Bestimmungsendgerät, und wenn der NHRP-Server das ATM-Bestimmungsendgerät nicht steuert, Übertragen des NHRP-Anforderungspakets über den zumindest einen der mehreren NHRP-Server zu dem ATM-Bestimmungsendgerät; wenn das ATM-Bestimmungsendgerät das NHRP-Anforderungspaket empfängt, Prüfen seiner eigenen VC (virtuelle Verbindung)-Ressourcenbedingung, und wenn das ATM-Bestimmungsendgerät feststellt, dass seine VC-Ressourcenbedingung ausreichend ist für die Verbindung, Übertragen eines NHRP-Antwortpakets enthaltend seine eigene ATM-Adresse, und wenn das ATM-Bestimmungsendgerät feststellt, dass seine VC-Ressourcenbedingung nicht ausreichend ist für die Verbindung, Übertragen eines NHRP-Antwortpakets, das eine Zurückweisungsantwort anzeigt; und
wenn der NHRP-Server das NHRP-Antwortpaket von dem ATM-Bestimmungsendgerät empfängt, wenn der NHRP-Server das ATM-Ursprungsendgerät steuert, Übertragen des NHRP-Antwortpakets direkt zu dem ATM-Ursprungsendgerät, und wenn der NHRP-Server das ATM-Ursprungsendgerät nicht steuert, Übertragen des NHRP-Antwortpakets über zumindest einen der mehreren NHRP-Server zu dem ATM-Ursprungsendgerät.

3. Adressenauflösungsverfahren nach Anspruch 1, bei dem mehrere ATM-Schalter, NHRP-Server und ATM-Endgeräte willkürlich mit dem ATM-Netzwerk verbunden sind, welches die Schritte aufweist:
ständiges Überwachen und Aufrechterhalten von VC-Ressourcenbedingungen von steuernden ATM-Endgeräten durch die NHRP-Server; und
wenn einer der NHRP-Server ein NHRP-Anforderungspaket empfängt, Beurteilen einer VC-Ressourcenbedingung bei einem Bestimmungsendgerät, und wenn der NHRP-Server feststellt, dass die VC-Ressourcenbedingung nicht ausreichend für eine Verbindung ist, Übertragen eines NHRP-Antwortpakets, das eine Zurückweisungsantwort anzeigt, und wenn der NHRP-Server feststellt, dass die VC-Ressourcenbedingung ausreichend für eine Verbindung ist, Übertragen eines normalen NHRP-Antwortpakets.

4. Adressenauflösungsverfahren nach Anspruch 1, bei dem mehrere ATM-Schalter, NHRP-Server und ATM-Endgeräte willkürlich mit dem ATM-Netzwerk verbunden sind, welches die Schritte aufweist:
ständiges Überwachen von VC-Ressourcenbedingungen der ATM-Endgeräte durch die ATM-Endgeräte;
wenn eines der ATM-Endgeräte feststellt, dass seine VC-Ressourcenbedingungen nicht ausreichend für die Verbindung sind, Übertragen eines NHRP-Registeranforderungspakets, das eine nicht verbindbare Bedingung für einen der NHRP-Server, der das ATM-Endgerät steuert, anzeigt, und wenn das ATM-Endgerät feststellt, dass seine VC-Ressourcenbedingung für die Verbindung ausreichend geworden ist, Übertragen eines normalen NHRP-Registeranforderungspakets zu dem NHRP-Server, der das ATM-Endgerät steuert; und
wenn der NHRP-Server ein NHRP-Anforderungspaket von einem ATM-Ursprungsendgerät empfängt, Beurteilen einer VC-Ressourcenbedingung bei einem ATM-Bestimmungsendgerät, und wenn der NHRP-Server feststellt, dass die VC-Ressourcenbedingung nicht ausreichend ist, Übertragen eines NHRP-Antwortpakets, das eine Zurückweisungsantwort anzeigt, und wenn der NHRP-Server feststellt, dass die VC-Ressorcenbedingung ausreichend ist, Übertragen eines normalen NHRP-Antwortpakets.

5. Adressenauflösungsverfahren nach Anspruch 1, bei dem mehrere ATM-Schalter, NHRP-Server und ATM-Endgeräte mit dem ATM-Netzwerk verbunden sind, welches die Schritte aufweist:
ständiges Überwachen von VC-Ressourcenbedingungen der ATM-Endgeräte durch die ATM-Endgeräte; und
wenn eines der ATM-Endgeräte feststellt, dass die Ressourcenbedingung nicht ausreichend für die Verbindung ist, Übertragen eines NHRP-Löschanforderungspakets, und wenn das ATM-Endgerät feststellt, dass die VC-Ressourcenbedingung ausreichend für die Verbindung geworden ist, Übertragen eines NHRP-Registeranforderungspakets.

6. Adressenauflösungsverfahren nach Anspruch 1, bei dem mehrere ATM-Schalter, ATMARP(ATM-Adressenauflösungsprotokoll)-Server und ATM-Endgeräte willkürlich mit dem ATM-Netzwerk verbunden sind, welches die Schritte aufweist:
wenn einer der ATMARP-Server ein ATMARP-Anforderungspaket empfängt, Übertragen des ATMARP-Anforderungspakets zu einem ATM-Bestimmungsendgerät bei einer ATM-Adresse, die in dem ATMARP-Anforderungspaket enthalten ist; und
wenn das ATM-Bestimmungsendgerät das ATMARP-Anforderungspaket empfängt, Beurteilen seiner eigenen VC-Ressourcenbedingung, und wenn das ATM-Bestimmungsendgerät feststellt, dass seine VC-Ressourcenbedingung ausreichend für die Verbindung ist, Übertragen eines ATMARP-Antwortpakets enthaltend seine eigene ATM-Adresse, und wenn das ATM-Bestimmungsendgerät feststellt, dass seine VC-Ressourcenbedingung nicht ausreichend für die Verbindung ist, Übertragen eines ATMARP-Antwortpakets, das eine Zurückweisungsantwort anzeigt.

7. Adressenauflösungsverfahren nach Anspruch 1, bei dem mehrere ATM-Schalter, ATMARP-Server und ATM-Endgeräte willkürlich mit dem ATM-Netzwerk verbunden sind, welches die Schritte aufweist:
ständiges Überwachen und Aufrechterhalten von VC-Ressourcenbedingungen von steuernden ATM-Endgeräten durch die ATMARP-Server; und
wenn einer der ATMARP-Server ein ATMARP-Anforderungspaket von einem ATM-Ursprungsendgerät empfängt, Beurteilen einer VC-Ressourcenbedingung bei einem ATM-Bestimmungsendgerät, und wenn der ATMARP-Server feststellt, dass die VC-Ressourcenbedingung nicht ausreichend für die Verbindung ist, Übertragen eines ATMARP-Antwortpakets, das eine Zurückweisungsantwort anzeigt, und wenn der ATMARP-Server feststellt, dass die VC-Ressourcenbedingung ausreichend für die Verbindung ist, Übertragen eines normalen ATMARP-Antwortpakets.

8. Adressenauflösungsverfahren nach Anspruch 1, bei dem mehrere ATM-Schalter, ATMARP-Server und ATM-Endgeräte willkürlich mit dem ATM-Netzwerk verbunden sind, welche die Schritte aufweist:
ständiges Überwachen von VC-Ressourcenbedingungen der ATM-Endgeräte durch die ATM-Endgeräte;
wenn eines der ATM-Endgeräte feststellt, dass seine VC-Ressourcenbedingung nicht ausreichend für die Verbindung ist, Übertragen eines ATMARP-Anforderungspakets, das eine nicht verbindbare Bedingung anzeigt, und wenn das ATM-Endgerät feststellt, dass die VC-Ressourcenbedingung ausreichend für die Verbindung geworden ist, Übertragen eines normalen ATMARP-Anforderungspakets; und
wenn einer der ATMARP-Server das ATMARP-Anforderungspaket von einem ATM-Ursprungsendgerät empfängt, Beurteilen einer VC-Ressourcenbedingung bei einem ATM-Bestimmungsendgerät, und wenn der ATMARP-Server feststellt, dass die VC-Ressourcenbedingung für die Verbindung nicht ausreichend ist, Übertragen eines ATMARP-Antwortpakets, das eine Zurückweisungsantwort anzeigt, und wenn der ATMARP-Server feststellt, dass die VC-Ressourcenbedingung ausreichend für die Verbindung ist, Übertragen eines normalen ATMARP-Antwortpakets.

9. Adressenauflösungssystem, bei dem ATM-Adressen von mit einem ATM-Netzwerk verbundenen ATM-Endgeräten aus IP-Adressen der ATM-Endgeräte erhalten werden, aufweisend einen Server zum Empfangen einer ATM-Bestimmungsadressenanforderung zum Anfordern einer ATM-Adresse eines ATM-Bestimmungsendgeräts von einem ATM-Ursprungsendgerät, zum Beurteilen, ob eine Ressourcenbedingung bei dem ATM-Bestimmungsendgerät ausreichend ist für eine Verbindung mit dem ATM-Ursprungsendgerät, und wenn die Ressourcenbedingung bei dem ATM-Bestimmungsendgerät ausreichend ist, Übertragen der ATM-Adresse des ATM-Bestimmungsendgeräts zu dem ATM-Ursprungsendgerät.

## Revendications

1. Procédé de résolution d'adresse, dans lequel des adresses ATM (mode de transfert asynchrone) de terminaux ATM connectés à un réseau ATM, sont obtenues à partir d'adresses IP des terminaux ATM, comprenant les étapes :
de réception d'une demande d'adresse ATM de destination pour demander une adresse ATM d'un terminal ATM de destination à partir d'un terminal ATM d'origine ;
de jugement si une condition de ressource au niveau du terminal ATM de destination est suffisante pour une connexion au terminal ATM d'origine ; et
si la condition de ressource au niveau du terminal ATM de destination est suffisante, de transmission de l'adresse ATM du terminal ATM de destination au terminal ATM d'origine.

2. Procédé de résolution d'adresse selon la revendication 1, dans lequel une pluralité de commutateurs ATM, de serveurs NHRP (à protocole de résolution d'adresse par saut suivant) et de terminaux ATM, sont connectés de manière arbitraire au réseau ATM, comprenant les étapes :
lorsque l'un des serveurs NHRP reçoit un paquet de demande NHRP en provenance d'un terminal ATM d'origine, si le serveur NHRM commande un terminal ATM de destination à une adresse ATM incluse dans le paquet de demandes NHRP, de transfert du paquet de demandes NHRP directement au terminal ATM de destination, et si le serveur NHRP ne commande pas le terminal ATM de destination, de transfert du paquet de demande NHRP au terminal ATM de destination par l'intermédiaire d'au moins l'un de la pluralité de serveurs NHRP ;
lorsque le terminal ATM de destination reçoit le paquet de demande NHRP, de contrôle de sa propre condition de ressource VC (connexion virtuelle), et si le terminal ATM de destination juge que sa condition de ressource VC est suffisante pour une connexion, de transmission d'un paquet de réponse NHRP incluant sa propre adresse ATM, et si le terminal ATM de destination juge que sa condition de ressource VC est insuffisante pour une connexion, de transmission d'un paquet de réponse NHRP indiquant une réponse de rejet ; et
lorsque le serveur NHRP reçoit le paquet de réponse NHRP en provenance du terminal ATM de destination, si le serveur NHRP commande le terminal ATM d'origine, de transfert du paquet de réponse NHRP directement au terminal ATM d'origine, et si le serveur NHRP ne commande pas le terminal ATM d'origine, de transfert du paquet de réponse NHRP au terminal ATM d'origine par l'intermédiaire d'au moins l'un de la pluralité de serveurs NHRP.

3. Procédé de résolution d'adresse selon la revendication 1, dans lequel une pluralité de commutateurs ATM, de serveurs NHRP et de terminaux ATM, sont connectés de manière arbitraire au réseau ATM, comprenant les étapes :
de surveillance et de maintien de manière continue de conditions de ressource VC de commande de terminaux ATM par les serveurs NHRP ; et
lorsque l'un des serveurs NHRP reçoit un paquet de demandes NHRP, de jugement d'une condition de ressource VC au niveau d'un terminal de destination, et si le serveur NHRP juge que la condition de ressource VC est insuffisante pour une connexion, de transmission d'un paquet de réponse NHRP indiquant une réponse de rejet, et si le serveur NHRP juge que la condition de ressource VC est suffisante pour une connexion, de transmission d'un paquet de réponse NHRP normal.

4. Procédé de résolution d'adresse selon la revendication 1, dans lequel une pluralité de commutateurs ATM, de serveurs NHRP et de terminaux ATM, sont connectés de manière arbitraire au réseau ATM, comprenant les étapes :
de surveillance de manière continue de conditions de ressource VC des terminaux ATM par les terminaux ATM ;
si l'un des terminaux ATM juge que sa condition de ressource VC est insuffisante pour une connexion, de transmission d'un paquet de demandes de registre NHRP indiquant une condition d'incapacité de connexion à l'un des serveurs NHRP qui commande le terminal ATM, et lorsque le terminal ATM juge que sa condition de ressource VC est devenue suffisante pour une connexion, de transmission d'un paquet de demande de registre NHRP normal au serveur NHRP qui commande le terminal ATM ; et
lorsque le serveur NHRP reçoit un paquet de demande NHRP en provenance d'un terminal ATM d'origine, de jugement d'une condition de ressource VC au niveau d'un terminal ATM de destination, et si le serveur NHRP juge que la condition de ressource VC est insuffisante, de transmission d'un paquet de réponsesNHRP indiquant une réponse de rejet, et si le serveur NHRP juge que la condition de ressource VC est suffisante, de transmission d'un paquet de réponse NHRP normal.

5. Procédé de résolution d'adresse selon la revendication 1, dans lequel une pluralité de commutateurs ATM, de serveurs NHRP et de terminaux ATM, sont connectés au réseau ATM, comprenant les étapes :
de surveillance de manière continue de conditions de ressource VC des terminaux ATM par les terminaux ATM ; et
si l'un des terminaux ATM juge que la condition de ressource est insuffisante pour une connexion, de transmission d'un paquet de demande de purge NHRP, et lorsque le terminal ATM juge que la condition de ressource VC est devenue suffisante pour une connexion, de transmission d'un paquet de demande de registre NHRP.

6. Procédé de résolution d'adresse selon la revendication 1, dans lequel une pluralité de commutateurs ATM, de serveurs ATMARP (à protocole de résolution d' adresse ATM) et de terminaux ATM, sont connectés de manière arbitraire au réseau ATM, comprenant les étapes :
lorsque l'un des serveurs ATMARP reçoit un paquet de demandes ATMARP, de transfert du paquet de demande ATMARP à un terminal ATM de destination, à une adresse ATM incluse dans le paquet de demande ATMARP ; et
lorsque le terminal ATM de destination reçoit le paquet de demande ATMARP, de jugement de sa propre condition de ressource VC, et si le terminal ATM de destination juge que sa condition de ressource VC est suffisante pour une connexion, de transmission d'un paquet de réponse ATMARP incluant sa propre adresse ATM, et si le terminal ATM de destination juge que sa condition de ressource VC est insuffisante pour une connexion, de transmission d'un paquet de réponse ATMARP indiquant une réponse de rejet.

7. Procédé de résolution d'adresse selon la revendication 1, dans lequel une pluralité de commutateurs ATM, de serveurs ATMARP et de terminaux ATM, sont connectés de manière arbitraire au réseau ATM, comprenant les étapes :
de surveillance et de maintien de manière continue de conditions de ressource VC de commande de terminaux ATM par les serveurs ATMARP ; et
lorsque l'un des serveurs ATMARP reçoit un paquet de réponse ATMARP en provenance d'un terminal ATM d'origine, de jugement d'une condition de ressource VC au niveau d'un terminal ATM de destination, et si le serveur ATMARP juge que la condition de ressource VC est insuffisante pour une connexion, de transmission d'un paquet de réponse ATMARP indiquant une réponse de rejet, et si le serveur ATMARP juge que la condition de ressource VC est suffisante pour une connexion, de transmission d'un paquet de réponse ATMARP normal.

8. Procédé de résolution d'adresse selon la revendication 1, dans lequel une pluralité de commutateurs ATM, de serveurs ATMARP et de terminaux ATM, sont connectés de manière arbitraire au réseau ATM, comprenant les étapes :
de surveillance de manière continue de conditions de ressource VC des terminaux ATM par les terminaux ATM ;
si l'un des terminaux ATM juge que sa condition de ressource VC est insuffisante pour une connexion, de transmission d'un paquet de demandes ATMARP indiquant une condition de non capacité de connexion, et lorsque le terminal ATM juge que la condition de ressource VC est devenue suffisante pour une connexion, de transmission d'un paquet de demandes ATMARP ; et
lorsque l'un des serveurs ATMARP reçoit le paquet de demandes ATMARP en provenance d'un terminal ATM d'origine, de jugement d'une condition de ressource VC au niveau d'un terminal ATM de destination, et si le serveur ATMARP juge que la condition de ressource VC est insuffisante pour une connexion, de transmission d'un paquet de réponses ATMARP indiquant une réponse de rejet, et si le serveur ATMARP juge que la condition de ressource VC est suffisante pour une connexion, de transmission d'un paquet de réponses ATMARP normal.

9. Système de discrimination d'adresse, dans lequel des adresses ATM de terminaux ATM connectés à un réseau ATM, sont obtenues à partir d'adresses IP des terminaux ATM, comprenant un serveur pour recevoir une demande d'adresse ATM de destination pour demander une adresse ATM d'un terminal ATM de destination à partir d'un terminal ATM d'origine, de jugement si une condition de ressource au niveau du terminal ATM de destination est suffisante pour une connexion au terminal ATM d'origine, et si la condition de ressource au niveau du terminal ATM de destination, est suffisante, de transmission de l'adresse ATM du terminal ATM de destination au terminal ATM d'origine.
